# EUROPEAN PATENT SPECIFICATION

(11) **EP 2 867 772 B1**
(45) Date of publication and mention of the grant of the patent: **26.12.2018**
(21) Application number: 13737020.1
(22) Date of filing: 21.06.2013
(51) Int. Cl.: G06F 9/50, G06F 9/455

(54) **DYNAMIC RESOURCE ALLOCATION FOR VIRTUAL MACHINES**
DYNAMISCHE RESSOURCENZUWEISUNG FÜR VIRTUELLE COMPUTER
ATTRIBUTION DE RESSOURCES DYNAMIQUES POUR MACHINES VIRTUELLES

(30) Priority: 29.06.2012 US 201261666227 P; 12.03.2013 US 201313796136
(43) Date of publication of application: 06.05.2015
(73) Proprietor: Brocade Communications Systems, Inc., San Jose, CA 95134 (US)
(72) Inventor: CHIN, Bill Ying, Sunnyvale, California 94087 (US); ABRAHAM, Vineet M., Sunnyvale, California 94086 (US)
(74) Representative: Bosch Jehle Patentanwaltsgesellschaft mbH
(86) International application number: PCT/US2013/047105
(87) International publication number: WO 2014/004312

(56) References cited:
- US-A1- 2002 013 802
- US-A1- 2006 184 938
- US-A1- 2008 250 266
- US-A1- 2010 325 261

## Description

### BACKGROUND

The present disclosure relates generally to virtualization, and more particularly to techniques for dynamically changing the resources allocated to a virtual machine (VM) while the VM is operating.

The proliferation in systems and devices with multiple processors or processors with multiple cores coupled with advances in virtualization technologies has led to a boom in the use of virtual machines (VMs). A system or device comprising multiple single or multicore CPUs or even with a single CPU with multiple cores can now support and execute multiple separate VMs in parallel. Each VM is allocated its own resources such as computing and memory resources. The resources to be allocated to a VM are predefined before the VM is created or launches and mapped to the VM when the VM is created. Once a VM has been created, the resources mapped to the VM cannot be modified while the VM is operational (i.e., without having to stop, restart, or reboot the VM).

The resources allocated to a VM are thus static during the VM's operation. This static configuration does not allow a system providing multiple VMs to adapt to changing demands of the VMs. This restriction is especially problematic in a system running multiple VMs with a finite set of resources that can be allocated to the VMs.

US 2010/0325261 A1 discloses a system and method to manage information handling system resources in a virtual machine infrastructure. In this document, a proportion of a particular type of information handling system resource used by a particular virtual machine, accessible to a thin client handling system through a communications broker, is monitored and the specific data indicating the proportion of the particular type of system resource is sent to the broker, which also receives another data indicating a greater or lesser amount of particular type of system resource. This greater or lesser amount of particular type of system resource is automatically allocated to a specific virtual machine.

### BRIEF SUMMARY

Certain embodiments of the present invention enable the resources assigned or allocated to a virtual machine (VM) to be dynamically changed while the VM is operating without having to stop, reboot, or restart the VM.
According to the invention, there are provided a device as defined by independent claim 1 and a method as defined by independent claim 9.
Further advantageous features of the invention are defined by the dependent claims.

Advantageously, a resource assigned or allocated to an operating VM can be modified while the VM is operating and without having to stop, reboot, or restart the VM. The modification may correspond to increasing the amount of a resource being assigned to the VM. This may, for example, include assigning a new resource to the VM that was not previously assigned to the VM when the VM was created. The increase may also correspond to increasing the amount of a resource allocated to a VM from a first level to a higher second level. For example, increasing the amount of memory allocated to the VM. The modification may also correspond to decreasing the amount of a resource being assigned to a VM. For example, a resource previously allocated to a VM may be removed or deallocated from the VM while the VM is operating. As another example, the amount of a resource allocated to a VM may be reduced from a first level to a smaller second level. For example, reducing the amount of memory allocated to the VM.

Advantageously, resources may be dynamically allocated between multiple VMs while the VMs are operating and without having to stop, restart, or reboot the multiple VMs. For example, an amount of a resource allocated to a first operating VM may be removed or deallocated from the first operating VM and then allocated to a second operating VM. The deallocation and allocation operations may be performed while the first and second VMs are operational and without having to stop, reboot, or restart the first and second VMs.

Various resources may be dynamically allocated or deallocated to a VM while the VM is operating. Examples of resources include, without limitation, processing resources, memory resources, input/output resources (e.g., ports), network resources (e.g., bandwidth), non-volatile memory resources (e.g., disk storage, SSDs), and the like. For example, a network device may execute one or more VMs including a VM with a first number of processing units being assigned to the VM. A processing unit in the first number of processing units may be a CPU, a CPU core, or a percentage of a CPU core. This first number of processing units allocated to the VM may be dynamically changed while the VM is executing and without having to stop, reboot, or reset the VM. The change may comprise allocating additional processing units to the VM and/or reducing the number of processing units assigned to the VM.

Advantageously, resource allocation changes to one or more VMs provided for a user (e.g., a customer) may be made according to or in response to a Service-Level Agreement (SLA) entered into by the user. For example, SLA information for a customer may be used to determine one or more VMs to be provisioned for the customer and the resources to be assigned to the VMs. The resources allocated to the VMs may then dynamically be changed so as to satisfy or meet agreements made in the SLA. Changes to the SLA may also automatically trigger dynamic changes in allocation of resources to the VMs.

Advantageously, a device may execute a first virtual machine and a second virtual machine. The first virtual machine may be allocated a first amount of a resource and the second virtual machine may be allocated a second amount of the resource, where the second amount is different from the first amount. In response to an event (e.g., a failover event), the device may dynamically change the amount of the resource allocated to the first virtual machine from the first amount to the second amount and the amount of the resource allocated to the second virtual machine from the second amount to the first amount. The change in the amounts of resources allocated to the first and second virtual machines may be performed without stopping the first virtual machine or the second virtual machine.

The resource can be of various types such as a processing resource (e.g., processing units provided by the device), a system memory resource, a non-volatile memory resource, an input/output (I/O) resource, ports of the device, bandwidth resource, and the like.

Advantageously, the first virtual machine and the second virtual machine may each execute programs that are configured to monitor the resource usage of the virtual machines. These programs may communicate the resource usage information for the virtual machines to a third virtual machine (e.g., a management virtual machine) executed by the device. In some embodiments, programs executed by the management virtual machine may cause changes to be made to the resources allocated to the first and second virtual machines based upon the received resource usage information.

Advantageously, one or more programs executed by the third virtual machine may cause the change in the amount of the resource allocated to the first virtual machine from the first amount to the second amount and the change in the amount of the resource allocated to the second virtual machine from the second amount to the first amount to be performed.

Advantageously, a first virtual machine may be executed by a device using a first set of processing units of the device. The first virtual machine may operate in a first mode where a set of functions corresponding to the first mode is performed by one or more programs executed by the first virtual machine. While operating in the first mode, the first virtual machine may be allocated a first amount of a resource. The device may also execute a second virtual machine using a second set of processing units of the device. While the first virtual machine operates in the first mode, the second virtual machine may operate in a second mode wherein the set of functions is not performed by the second virtual machine. An event (e.g., a failover) may cause the device to cause the second virtual machine to operate in the first mode where the set of functions corresponding to the first mode is performed by one or more programs executed by the second virtual machine. Further, the device may cause the first virtual machine to operate in the second mode wherein the set of functions is not performed by the first virtual machine in the second mode. When the second virtual machine operates in the first mode, the device may automatically change the amount of the resource allocated to the second virtual machine from the second amount to the first amount. Advantageously, upon occurrence of the event, the amount of the resource allocated to the first virtual machine operating in the second mode maybe changed from the first amount to an amount allocated to the second virtual machine when the second virtual machine was operating in the second mode.

Advantageously, a device may store information related to a service level agreement (SLA). The device may execute a virtual machine and dynamically make changes to resources allocated to the virtual machine based upon the SLA information.

### BRIEF DESCRIPTION OF THE DRAWINGS

Fig. 1 is a simplified block diagram of a computing device that may incorporate an embodiment of the present invention;
Fig. 2 depicts a simplified flowchart depicting processing performed when VMs are launched according to an embodiment of the present invention;
Fig. 3 depicts a simplified flowchart depicting processing performed when VMs are launched according to yet another embodiment of the present invention;
Fig. 4 depicts a simplified flowchart depicting processing performed in the monitoring phase according to an embodiment of the present invention;
Fig. 5 depicts a simplified flowchart depicting processing performed for dynamically deallocating an amount of a resource from a VM according to an embodiment of the present invention;
Fig. 6 depicts a simplified flowchart depicting processing performed for dynamically allocating an amount of a resource to a VM according to an embodiment of the present invention;
Fig. 7 depicts a simplified flowchart depicting a priority-based technique for dynamically freeing resources from VMs and making them available for allocation to a VM according to an embodiment of the present invention;
Fig. 8 shows an example of automatic dynamic resource allocation between an active VM and a passive VM according to an embodiment of the present invention;
Fig. 9 shows an example of a networked environment in which VMs corresponding to an SLA may be spread across multiple networked systems according to an embodiment of the present invention; and
Fig. 10 provides an example of a network device that may incorporate an embodiment of the present invention.

The foregoing, together with other features and embodiments will become more apparent upon referring to the following specification, claims, and accompanying drawings.

### DETAILED DESCRIPTION

In the following description, for the purposes of explanation, specific details are set forth in order to provide a thorough understanding of embodiments of the invention. However, it will be apparent that various embodiments may be practiced without these specific details. The figures and description are not intended to be restrictive.

Certain embodiments of the present invention enable resources assigned or allocated to a virtual machine (VM) to be dynamically modified or changed while the VM is operating without having to stop, restart, or reboot the VM. One or more resources may be dynamically added to (assigned or allocated to) or removed from (deallocated) from a VM while the VM is operating without having to reboot, restart, or stop the VM whose resource allocation is being changed. Dynamically changing resource allocation for a VM implies that an amount of a resource can be allocated to or deallocated from a VM that is already executing or has already been launched without having to stop, restart, or reboot that VM. A resource that can be dynamically allocated to or deallocated from a VM may be referred to as a dynamic resource.

In one embodiment, the dynamic resource allocation modification may correspond to increasing the amount of a resource being assigned to the VM. This may, for example, include assigning a new resource to the VM that was not previously assigned to the VM. The increase may also correspond to increasing the amount of a resource allocated to a VM from a first level to a higher second level. For example, increasing the amount of memory allocated to the VM. The modification may also correspond to decreasing the amount of a resource being assigned to the VM. For example, a resource previously allocated to a VM may be removed or deallocated from the VM while the VM is operating. As another example, the amount of a resource allocated to a VM may be reduced from a first level to a smaller second level. For example, reducing the amount of memory allocated to the VM. In this manner, resources assigned to a VM are not static and can instead be dynamically changed while the VM is operating without having to stop, reboot, or restart the VM.

In certain embodiments, resources may be dynamically allocated between multiple VMs. For example, an amount of a resource allocated to a first operating VM may be removed or deallocated from the first operating VM and then allocated to a second operating VM. The deallocation and the allocation operations may be performed while the first and second VMs are operational and without having to stop, reboot, or restart the first and second VMs.

The ability to make dynamic changes to resources between VMs may be used by any system or device that can support multiple VMs. Systems that can support multiple VMs include, without limitation, a single CPU core system where a percentage of the core is allocated to a first VM and another percentage is allocated to a second VM; a multicore CPU system where a first set of one or more cores is allocated to a first VM and a second set of one or more cores is allocated to a second VM; a multiprocessor system where a first set of one or more processors is allocated to a first VM and a second set of one or more processors is allocated to a second VM; and various combinations thereof.

Various resources may be dynamically allocated or deallocated to a VM while the VM is operating. Examples include, without limitation:
(1) Processing resources - The number of processing units assigned to a VM can be changed (e.g., increased or reduced) while the VM is operating. A processing unit may correspond to a CPU core, a CPU or processor, or a percentage of a CPU core..
(2) Memory resources - The amount of system memory (e.g., RAM) assigned to a VM can be changed (e.g., increased or reduced) while the VM is operating.
(3) Network resources such as bandwidth resources, ports, etc.
(4) Non-volatile memory or storage resources such as disk storage, solid state drives (SSDs), etc.
(5) I/O resources (e.g., I2C, PCIe, PLB, etc.)

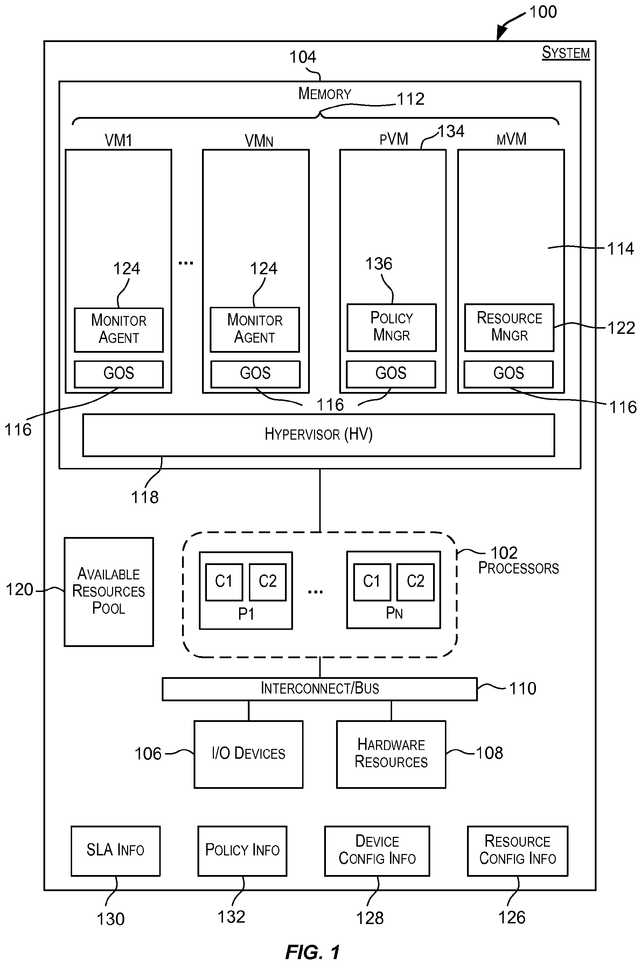

Fig. 1 is a simplified block diagram of a computing device 100 that may incorporate an embodiment of the present invention. As shown, device 100 comprises multiple physical processors (P₁ to P_{N}) 102 coupled to system memory 104, input/output (I/O) devices 106, and other hardware resources 108 via an interconnect/bus 110. Interconnect 110 may include one or more interconnects or buses. Device 100 depicted in Fig. 1 is merely an example and is not intended to unduly limit the scope of embodiments of the present invention as recited in the claims. One of ordinary skill in the art would recognize many variations, alternatives, and modifications. Device 100 may be embodied in various different forms. For example, in one embodiment, device 100 may be embodied as a network device such as a switch or router provided by Brocade Communications Systems, Inc. of San Jose, California.

In the embodiment depicted in Fig. 1, device 100 comprises multiple processors 102. Each processor may be a single-core or a multicore processor. For example, as shown, processors P₁ and P_{N} are multicore processors each comprising two cores C1 and C2. However, this is not intended to be limiting. In certain embodiments, device 100 may comprise just a single multicore processor. In yet other embodiments, device 100 may comprise multiple processors, one or more of which may be multicore processors. In yet other embodiments, device 100 may comprise multiple single core processors. Examples of multicore processors include but are not limited to various multicore processors provided by Freescale Semiconductor, Inc., such as the QorIQ and the PowerQUICC lines of processors provided by Freescale, and others. The cores and the processors provided by device 100 represent the processing resources that can be allocated to VMs executed by device 100. The cores and processors may be referred to as processing units of device 100.

Memory 104 represents the system memory resources available to VMs executed by device 100. Information related to runtime processing performed by processors 102 may be stored in memory 104. Memory 104 may be a RAM (e.g., SDR RAM, DDR RAM) and is sometimes referred to as the device's or system's main memory. I/O devices 106 may include, without limitation, devices such as Ethernet devices, PCIe devices, eLBC devices, and others. Hardware resources 108 may include, without limitation, hardware devices such as FPGAs, ASICs, other merchant silicon, and the like. A hardware resource can be any hardware device that can be exclusively owned by any VM or shared among a set of VMs. Hardware devices that do not support native virtualization (e.g., SR-IOV where part of the chip can be allocated to different VMs) are exclusively owned by one VM or virtualized within the hypervisor.

Device 100 may be configured to execute multiple VMs simultaneously using one or more processing units of device 100. Device 100 thus acts as the host machine for the VMs. The creation and management of the VMs is facilitated by a software program that enables virtualization. An example of such a program is hypervisor 118 that executes in device 100's system memory 104. Hypervisor 118 may be loaded by device 100 upon a power-on or a device stop, reboot, or restart. Hypervisor 118 is configured to launch one or more VMs and allocate resources to the VMs upon launch. The available resources (e.g., processing, memory, and hardware resources of device 100) may be partitioned between the VMs by hypervisor 118. According to certain embodiments of the present invention, hypervisor 118 also facilitates dynamic modifications to one or more resources assigned to a VM while the VM is operational and without having to stop, reboot, or restart the VM.

Multiple VMs 112 (e.g., VM₁, VM_{N}, pVM, mVM shown in Fig. 1) may be simultaneously executed by device 100. Each VM typically has its own operating system, which is commonly referred to as a guest operating system (or GOS) 116. A GOS for a VM is loaded by hypervisor 118 when the VM is created. The GOS executed by one VM may be the same as or different from the GOS for another VM. Examples of GOSs include without limitation different versions of the Linux OS, Windows OS, networking operating systems (NOSs), etc. For example, in one situation, VM₁ may execute LinuxV1, mVM may execute LinuxV2, VM₂ may execute a version of the Windows OS, and the like. In this manner, multiple operating systems may run concurrently on device 100.

Each VM may operate independently of the other VMs. A particular VM may not even be aware of the existence of other VMs operating in parallel with the particular VM on device 100. Each virtual machine can thus operate as an independent virtual system.

In one embodiment, in order to facilitate dynamic modifications to VMs, hypervisor 118 is configured to create a management VM (mVM) 114 for executing code, instructions, and programs for facilitating dynamic modifications to one or more resources allocated to one or more VMs. One or more programs may be executed by mVM 114 that enable and facilitate dynamic changes to resources allocated to a VM when the VM is operating without having to stop, reboot, or restart the VM. For example, as shown in Fig. 1, in one embodiment, a resource manager program 122 may be executed by mVM 114. Resource manager 122 may be configured to determine and convey to hypervisor 118, the number of VMs (e.g., VM₁, VM₂, etc.) to be started and, for each VM, the amount of resources to be allocated to the VM when the VM is created or launched. Hypervisor 118 is then configured to create or launch the VMs and allocate resources to the VMs at the time of creation based upon information received from resource manager 122. In alternative embodiments, the functionality of resource manager 122 may be performed by multiple programs executed by mVM 114.

In certain embodiments, information identifying the VMs to be launched and the resources to be allocated to the VMs at the time of the launch may be predefined and specified by resource configuration information 126 and device configuration information 128. In one embodiment, device configuration information may be stored in a file (e.g., device configuration file or DCF) and may identify the devices that are available for use by one or more VMs executed by device 100. Resource configuration information 126 may also be stored in a file (e.g., resource configuration file or RCF) and may identify the VMs to be started and the resources to be allocated to each VM at the time of launch. The predefined resources for a VM specified in the RCF may include processing resources, system memory resources, non-volatile memory resources, networking resources, bandwidth resources, I/O resources, and the like. For example, the RCF may specify an amount of system memory 104 to be assigned to a VM upon creation. In one embodiment, resource manager 122 is configured to access resource configuration information 126, determine the VMs to be created and the resources to be allocated to the VMs and convey the information to hypervisor 118. Hypervisor 118 then creates the specified VMs and allocates resources to the VMs at the time of creation per information received from resource manager 122. In one embodiment, mVM 114 itself and the resources to be allocated to mVM 114 may be specified by resource configuration information 126.

Hypervisor 118 is configured to launch each VM with the predefined set of resources as specified by resource configuration information 126. A VM may then execute within its allocated portion of system memory using the resources allocated to the VM at the time of launch. The GOS and other software components executed by the VM may be executed within the system memory space allocated to the VM. Types of software components that can be executed by a VM may include without limitation an application, a process, a thread, an operating system (including a component of the operating system such as an operating system kernel module), a device driver, a hypervisor, and the like. Software code corresponding to these components may be loaded and executed within the system memory allocated to the VM. Further, the data used by the various executing components of the VM may be loaded and stored in the system memory space allocated to the VM.

Each VM may be allocated one or more processing resources. In certain embodiments, a processing resource may be measured in terms of one or more processing units provided by a device such as device 100. In one embodiment, a processing unit may correspond to a processor, a processor core, or a percentage of a processor core. One or more processing units may be allocated to a VM. Device 100 may provide a limited number of processing units that may be shared among the VMs executed by device 100 according to embodiments of the present invention. Examples of configurations that can support multiple VMs (e.g., for the VMs depicted in Fig. 1) include without limitation: core C1 of processor P1 may be allocated to VM₁, core C2 of processor P1 and core C1 of processor P2 may be allocated to mVM, a processor P3 may be allocated to VM₂, 60% of a core C1 of processor P4 may be assigned to VM₃ and 40% of the core of P4 may be assigned to VM₄, and the like.

Portions of other resources, including I/O devices 106, networking resources, and other hardware resources 108, may also be allocated to the VMs when the VMs are created.

Resources that have not been allocated and are available for use may be pooled into a resource pool 120. For example, resources those have not been assigned or allocated to any VM may be represented in resource pool 120. Resource pool 120 thus represents resources that are available for allocation to a VM as needed.

Once the VMs have been launched by hypervisor 118, resource manager 122 is configured to monitor the resource allocation and resource usage of the multiple operational VMs and initiate dynamic changes to resources allocated to the VMs as and when needed. Various different conditions may be monitored to determine when a change is to be made. In one embodiment, to facilitate monitoring of the VMs, a special program (or multiple programs) referred to as a "monitor agent" (also referred to as an SLA agent) may be executed by each operational VM. For example, as shown in Fig. 1, monitor agent 124 is executed by the VMs. In certain embodiments, monitor agent 124 for a VM is configured to monitor the resource usage of the VM and convey the information to resource manager 122. Monitor agent 124 executed by a VM may convey the resource usage information for the VM to resource manager 122 at periodic programmable intervals and/or upon the occurrence of certain events. A push or a pull model may be used to communicate the resource usage information from monitor agents 124 to resource manager 122.

A resource manager 122 may receive resource usage information for one or more VMs from the monitor agents 124 executed by the VMs. Based upon this received information and further based upon various system conditions, resource manager 122 is configured to determine when a change in allocation of a resource for a VM is to be performed. When a change is to be performed, resource manager 122 may determine the VM for which the change is to be performed, a particular resource whose allocation is to be changed, and the amount by which the allocation for the resource is to be changed. For example, resource manager 122 may determine based upon information received from monitor agent 124 for VM₁ that the memory allocation for VM₁ is to be increased from its current allocation to a higher allocation.

Upon determining that allocation of a resource for a VM is to be changed, resource manager 122 may then send a signal to hypervisor 118 to perform the change. In one embodiment, as part of the processing, resource manager 122 may send information to hypervisor 118 identifying the VM whose allocation is to be changed, the resource whose allocation is to be changed, and the amount by which the allocation is to be changed. Hypervisor 118 then performs the processing needed for dynamically adjusting the allocation of the identified VM without having to stop, restart, or reboot the particular VM. In this manner, monitor agents 124, resource manager 122, and hypervisor 118 working in cooperation enables dynamic changes to be made to resources allocated to the VMs, all without having to stop, reboot, or restart the VMs.

As described above, in certain embodiments, the VMs to be started by device 100 and the resources to be assigned to each VM when the VM is launched may be predefined and specified by a resource configuration file (RCF) and a device configuration file (DCF). The RCF may be created by a user of device 100 or by a system administrator. In one embodiment, the RCF may comprise information (e.g., rules) identifying thresholds and conditions indicating when a change is to be made and the type of change to be made. In some embodiments, programs executed by mVM 114, such as resource manager 122, are configured to monitor device 100, determine, based upon the information in RCF, when a change is to be made and the type of change to be made. Hardware devices that do not support native virtualization (e.g., SR-IOV where part of the chip can be allocated to different VMs) are exclusively owned by one VM or virtualized within the hypervisor. For devices identified by the DCF that are wholly allocated to a VM, hypervisor 118 may map the devices to a VM when it is started.

A non-limiting example of information that may be stored in a sample RCF is shown below in Table A.

**TABLE A: Resource Configuration File**

| **VM** | **Resource** | **Base** | **Max** | **Alloc** | **Free** | **Priority** |
|---|---|---|---|---|---|---|
| mVM | CPU Cores | 1 | 1 | 90%/30 sec | 30%/60 sec | High |
| mVM | Memory | 1 GB | 1 GB | 90%/60 sec | 50%/60 sec | High |
| mVM | Network Bandwidth | 2 GB/sec | 2 GB/sec | 90%/60 sec | 10%/60 sec | High |
| mVM | Network Ports | 20 | 20 | N/A | N/A | High |
| mVM | Non-volatile memory | 5 GB | 5 GB | 90%/90 sec | 40%/90 sec | High |
| 1 | CPU Cores | 2 | 4 | 90%/60 sec | 30%/60 sec | Medium |
| 1 | Memory | 2 GB | 3 GB | 90%/90 sec | 50%/2 min | Medium |
| 1 | Network Bandwidth | 5 GB/sec | 10 GB/sec | 90%/60 sec | 10%/2 min | Medium |
| 1 | Network Ports | 100 | 100 | N/A | N/A | Medium |
| 1 | Non-volatile memory | 10 GB | 20 GB | 90%/90 sec | 40%/5 min | Medium |
| 2 | CPU Cores | 2 | 4 | 90%/3 min | 30%/2 min | Low |
| 2 | Memory | 4 GB | 6 GB | 90%/5 min | 50%/2 min | Low |
| 2 | Network Bandwidth | 5 GB/sec | 10 GB/sec | 90%/5 min | 30%/1 min | Low |
| 2 | Network Ports | 250 | 250 | N/A | N/A | Low |
| 2 | Non-volatile memory | 10 GB | 20 GB | 90%/8 min | 40%/5 min | Low |
| 3 | CPU Cores | 2 | 4 | 85%/30 sec | 20%/2 min | High |
| 3 | Memory | 4 GB | 6 GB | 80%/60 sec | 30%/4 min | High |
| 3 | Network Bandwidth | 5 GB/sec | 10 GB/sec | 70%/60 sec | 10%/5 min | High |
| 3 | Network Ports | 250 | 250 | N/A | N/A | High |
| 3 | Non-volatile memory | 10 GB | 20 GB | 80%/90 sec | 40%/8 min | High |

The RCF depicted in Table A comprises multiple columns. The first column "VM" identifies the VMs to be launched. For example, as shown above, the VMs to be launched include an mVM, a VM₁ ("1"), a VM₂ ("2'), and a VM₃ ("3"). The second column "Resource" identifies a resource allocated to a VM. In Table A, the resources specified for each VM include CPU cores (i.e., processing resource), memory, network bandwidth, network ports, and non-volatile memory.

The "Base" column identifies the base amount of a resource that is to be assigned to a VM when the VM is launched. For each resource, this column identifies the minimum or base amount of the resource that is required by a VM. Resources for a VM are not allowed to drop below their corresponding minimum or base levels. If the base set of resources for a particular VM is unavailable, then that VM may not be created. The particular VM may be started only when enough system resources, as specified by the base set of resources for that VM, are available. For example, per Table A, the base memory resource to be allocated to VM₁ when VM₁ is launched is 2 GB.

The "Max" column identifies the maximum amount of a resource that can be allocated to a VM (i.e., the maximum amount of a specific resource that a VM is allowed to own or consume). When such a parameter is set for a VM for a particular resource, the VM is not allocated the particular resource beyond this maximum amount. For example, per Table A, the maximum memory resource that is permitted to be assigned to VM₁ is 3 GB.

The "Alloc" column in Table A identifies a condition (e.g., a threshold) when additional quantities of a resource may be dynamically allocated to the VM. In certain embodiments, when the resource utilization for a resource for a VM is at or exceeds the allocation threshold for the specified amount of time in the RCF, attempts are made to allocate additional amounts of the resource for the VM. The additional resource may be allocated from available resource pool 120 or a portion thereof may be dynamically deallocated from other one or more VMs and then allocated to the VM. In certain embodiments, resource manager 122 monitors this threshold for a VM and, based upon usage information received from a monitor agent for the VM, determines when the amount of a resource allocated to the VM is to be dynamically increased. For example, Table A indicates that the "Alloc" value for CPU cores for VM₁ is "90%/60 sec". This implies that if the CPU resources allocated to VM₁ are at or over 90% utilization over a period of 60 seconds, then additional CPU resources may be assigned or allocated to VM₁.

The "Free" column in Table A identifies a condition (e.g., a threshold) when a resource allocated to a VM may be freed or deallocated from the VM and returned to the system resource pool. In certain embodiments, when the resource utilization of a resource for a VM is at or falls below the free threshold for the specified amount of time in the RCF, attempts are made to deallocate portions of the resource from the VM. The deallocated and unused resources are returned to the available resource pool 120. In certain embodiments, resource manager 122 monitors this threshold for a VM and, based upon usage information received from a monitor agent for the VM, determines when the amount of a resource allocated to the VM can be reduced. For example, Table A indicates that the "Free" value for CPU cores for VM1 is "30%/60 sec". This implies that if the CPU resources allocated to VM₁ are at or go below 30% utilization over a period of 60 seconds, then some CPU resources may be dynamically removed or deallocated from VM₁.

The "Priority" column in Table A specifies a priority value for a VM. The priority value for a VM may be used to allocate and deallocate one or more resources for a VM. As described above, resources may be dynamically allocated to a VM from available resources pool 120. In certain embodiments, if a resource is to be allocated to a VM of a particular priority and the requisite amount of the resource is not available in available resource pool 120, resource manager 122 may check VMs with a lower priority than the particular priority to see if the requisite amount of the resource can be deallocated from one or more these VMs and then allocated to the VM with the particular priority. In one embodiment, a check is made to see if the lower priority VMs have been allocated additional resources beyond their base configuration. If so, resource manager 122 may reclaim the additional resources and make them available to the available resource pool 120 for allocation to a higher priority VM. In certain embodiments, higher priority VMs are allocated resources before lower priority VMs. In some embodiments, within VMs at the same priority level, resources may be allocated on a first come first served basis. In certain embodiments, a "reclaimable" level priority may be assigned, representing the lowest priority level. The mVM can shut down a VM that is marked as "reclaimable" and reclaim all of the VM's resources.

In the embodiment depicted in Table A, the priorities are specified on a per VM basis. For example, the priority for mVM is High, for VM₁ is Medium, for VM₂ is Low, and the like. In certain embodiments, a priority may be specified on a per VM per resources basis. An example of an RCF that specifies a priority on a per VM-per resource basis is depicted in Table B.

**TABLE B: Resource Configuration File (another embodiment)**

| **VM** | **Resource** | **Base** | **Max** | **Alloc** | **Free** | **Priority** |
|---|---|---|---|---|---|---|
| mVM | CPU Cores | 1 | 1 | 90%/30 sec | 30%/60 sec | High |
| mVM | Memory | 1 GB | 1 GB | 90%/60 sec | 50%/60 sec | High |
| mVM | Network Bandwidth | 2 GB/sec | 2 GB/sec | 90%/60 sec | 10%/60 sec | High |
| mVM | Network Ports | 20 | 20 | N/A | N/A | High |
| mVM | Non-volatile memory | 5 GB | 5 GB | 90%/90 sec | 40%/90 sec | High |
| 1 | CPU Cores | 2 | 4 | 90%/60 sec | 30%/60 sec | High |
| 1 | Memory | 2 GB | 3 GB | 90%/90 sec | 50%/2 min | Medium |
| 1 | Network Bandwidth | 5 GB/sec | 10 GB/sec | 90%/60 sec | 10%/2 min | Medium |
| 1 | Network Ports | 100 | 100 | N/A | N/A | Medium |
| 1 | Non-volatile memory | 10 GB | 20 GB | 90%/90 sec | 40%/5 min | Low |
| 2 | CPU Cores | 2 | 4 | 90%/3 min | 30%/2 min | Low |
| 2 | Memory | 4 GB | 6 GB | 90%/5 min | 50%/2 min | Low |
| 2 | Network Bandwidth | 5 GB/sec | 10 GB/sec | 90%/5 min | 30%/1 min | Low |
| 2 | Network Ports | 250 | 250 | N/A | N/A | Low |
| 2 | Non-volatile memory | 10 GB | 20 GB | 90%/8 min | 40%/5 min | Low |
| 3 | CPU Cores | 2 | 4 | 85%/30 sec | 20%/2 min | High |
| 3 | Memory | 4 GB | 6 GB | 80%/60 sec | 30%/4 min | High |
| 3 | Network Bandwidth | 5 GB/sec | 10 GB/sec | 70%/60 sec | 10%/5 min | Medium |
| 3 | Network Ports | 250 | 250 | N/A | N/A | High |
| 3 | Non-volatile memory | 10 GB | 20 GB | 80%/90 sec | 40%/8 min | Low |

As shown in Table B, for VM₁, the priority is High for CPU resources, Medium for memory resources, network bandwidth resources, and network ports, and Low for non-volatile memory resources. In a similar manner, for VM₃, the priority is High for CPU resources, memory resources, and network ports, Medium for network bandwidth resources, and Low for non-volatile memory resources.

In some embodiments, the VMs executed by device 100 may include a special policy VM (pVM) that may be launched by hypervisor 118 for executing programs such as policy manager 136 that perform policy management functions across networked devices. The policy management may be performed based upon policy information 132. In alternative embodiments, policy manager 136 can reside on a separate server from the systems executing the various VMs. Policy information 132 may also be stored on this separate server. Further details are provided below.

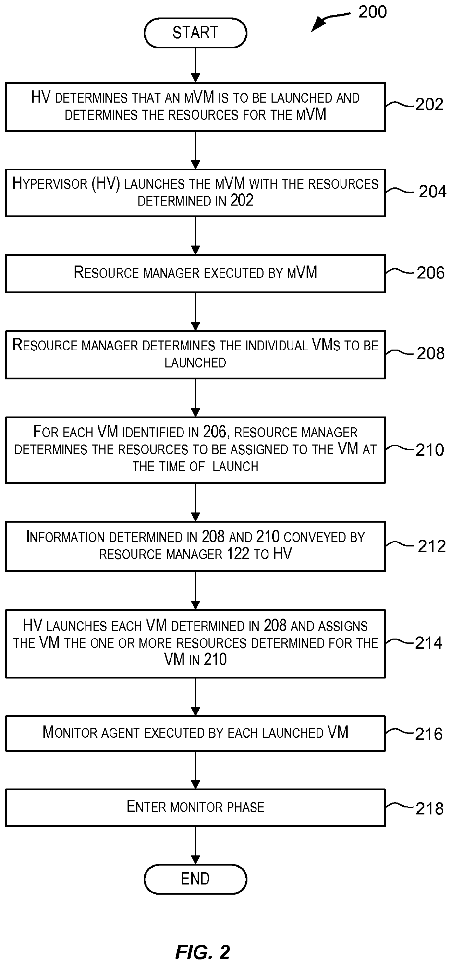

Fig. 2 depicts a simplified flowchart 200 depicting processing performed when VMs are launched according to an embodiment of the present invention. The processing depicted in Fig. 2 may be implemented in software (e.g., code, instructions, program) executed by one or more processing units (e.g., processors, cores, certain percentage of a core), hardware, or combinations thereof. In certain embodiments, the software may be stored on a non-transitory computer-readable storage device or medium. The particular series of processing steps depicted in Fig. 2 is not intended to be limiting.

At 202, hypervisor 118 determines that an mVM is to be launched and determines the resources to be allocated to the mVM. In certain embodiments, hypervisor 118 may determine this information from a resource configuration file such as the file depicted in Table A above. As part of 202, hypervisor 118 may determine the base amount of resources to be allocated to the mVM. For example, for the resource configuration file depicted in Table A, hypervisor 118 may determine that the mVM is to be allocated 1 CPU core, 1 GB of system memory, 2 GB/sec of network bandwidth, 20 network ports, and 5 GB of non-volatile memory (e.g., disk storage).

At 204, hypervisor 118 launches the mVM with the resources determined in 204. In one embodiment, if the base resources needed for launching the mVM are not available, then the mVM may not be launched and an error condition may be reported. In certain embodiments, the mVM could synchronize with the pVM to get up to date resource allocations and update the RCF accordingly. The pVM may dynamically change the RCF for all mVMs it communicates with based on real-time input it receives from the monitoring agents.

At 206, one or more programs that facilitate and enable dynamic modifications to VMs are executed in the mVM. For example, in one embodiment, resource manager 122 may be started and executed in the mVM.

At 208, resource manager 122 then determines the individual VMs to be launched. In certain embodiments, resource manager 122 may determine this information from the resource configuration file. For example, from the RCF depicted in Table A, resource manager 122 may determine that three VMs (1 or VM₁, 2 or VM₂, and 3 or VM₃) are to be launched.

At 210, for each VM determined in 208, resource manager 122 may determine the resources to be assigned to the VM at the time of launch. In certain embodiments, resource manager 122 may determine this information from the RCF. For example, from the RCF depicted in Table A, resource manager 122 may determine that:
- for VM₁, the base resources to be allocated to the VM at the time of launch include 2 CPU cores, 2 GB of system memory, 5 GB/sec of network bandwidth, 100 network ports, and 10 GB of non-volatile memory (e.g., disk storage);
- for VM₂, the base resources to be allocated to the VM at the time of launch include 2 CPU cores, 4 GB of system memory, 5 GB/sec of network bandwidth, 250 network ports, and 10 GB of non-volatile memory; and
- for VM₃, the base resources to be allocated to the VM at the time of launch include 2 CPU cores, 4 GB of system memory, 5 GB/sec of network bandwidth, 250 network ports, and 10 GB of non-volatile memory.

At 212, the information determined by resource manager 122 in 208 and 210 is communicated to hypervisor 118. At 214, based upon information received from resource manager 122 in 212, hypervisor 118 launches each VM determined in 208 with the resources to be allocated to the VM determined in 212. In one embodiment, if the base amount of a resource is not available for a particular VM, then that VM is not launched and an error condition may be reported. In this manner, a preconfigured base set of resources may be allocated to each VM when the VM is started or launched (i.e., starts operating).

At 216, a newly launched VM may launch and execute a program or set of programs that facilitate and enable dynamic modifications to the resources allocated to the VM. For example, a VM may launch and execute a monitor agent that is configured to monitor the resources used by the VM and convey the information to resource manager 122.

At 218, the system enters into a monitor phase. In this phase, the usage of resources by the various VMs is monitored. For example, a monitor agent executed by a VM may monitor the resources used by the VM and communicate this information to resource manager 122 executing in the mVM. The monitor agent may convey the resource usage information to resource manager 122 at periodic programmable intervals and/or upon the occurrence of certain events. A push or a pull model may be used for the communication. In the monitor phase, resource manager 122 executed by mVM is configured to receive information from various monitor agents, and based upon the received information, determine whether resource allocation modifications are to be made to one or more VMs. Resource manager 122 may also monitor for other system conditions or signals that may trigger a resource allocation modification for a VM. If such a modification is to be performed, then resource manager 122 may convey the information to hypervisor 118 and hypervisor 118 then causes the modification to occur dynamically without having to stop, reboot, or restart the VM.

Various different resources may be monitored in the monitor phase. For example, in certain embodiments, the monitoring for a VM may include, without limitation, monitoring the VM's CPU utilization, memory utilization, network bandwidth utilization, non-volatile memory (e.g., disk storage) utilization, and the like. In one embodiment, specific utilization parameters may be defined for a VM. For example, CPU utilization may be defined as (route updates)/second. A custom formula may be used to calculate the CPU utilization based on custom metrics. The utilization metrics may be defined in the VM's resource monitor configuration file (RMCF). In certain embodiments, the RMCF is a mapping formula that converts application specific metrics into resources required to achieve them. For example, a web server might be measured in pages served per second. To serve 100,000 pages/sec may required a specific set of resources available to it. For example 2 CPU cores, 4 GB memory, 4 network ports, etc. In some embodiments, in operation, the mVM may periodically poll each VM to determine its resource utilization.

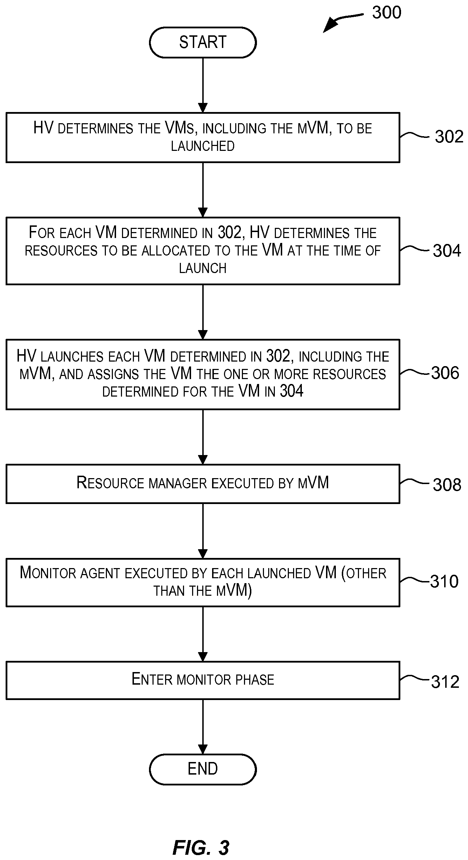

Fig. 3 depicts a simplified flowchart 300 depicting processing performed when VMs are launched according to yet another embodiment of the present invention. The processing depicted in Fig. 3 may be implemented in software (e.g., code, instructions, program) executed by one or more processing units (e.g., processors, cores, a certain percentage of a core), hardware, or combinations thereof. In certain embodiments, the software may be stored on a non-transitory computer-readable storage device or medium. The particular series of processing steps depicted in Fig. 3 is not intended to be limiting.

At 302, hypervisor 118 determines all the VMs to be launched. In certain embodiments, hypervisor 118 may determine this information from the RCF. For example, from the RCF depicted in Table A, hypervisor 118 may determine that the VMs to be launched include the mVM, VM₁, VM₂, and VM₃.

At 304, for each VM determined in 302, hypervisor 118 determines the resources to be allocated to the VM at the time of launching the VM. In certain embodiments, hypervisor 118 may determine this information from the RCF. For example, from the RCF depicted in Table A, hypervisor 118 may determine that the base resources to be allocated to the VMs at the time of launch are:
- for mVM, the base resources to be allocated to the VM at the time of launch include 1 CPU core, 1 GB of system memory, 2 GB/sec of network bandwidth, 20 network ports, and 5 GB of non-volatile memory;
- for VM₁, the base resources to be allocated to the VM at the time of launch include 2 CPU cores, 2 GB of system memory, 5 GB/sec of network bandwidth, 100 network ports, and 10 GB of non-volatile memory;
- for VM₂, the base resources to be allocated to the VM at the time of launch include 2 CPU cores, 4 GB of system memory, 5 GB/sec of network bandwidth, 250 network ports, and 10 GB of non-volatile memory; and
- for VM₃, the base resources to be allocated to the VM at the time of launch include 2 CPU cores, 4 GB of system memory, 5 GB/sec of network bandwidth, 250 network ports, and 10 GB of non-volatile memory.

At 306, hypervisor 118 launches each VM determined in 302 with the resources to be allocated to the VM determined in 306. In one embodiment, if the base amount of resource is not available for a particular VM, then that VM is not launched and an error condition may be reported.

At 308, one or more programs that facilitate and enable dynamic modifications to VMs are executed in the mVM. For example, in one embodiment, resource manager 122 may be started and executed in the mVM.

At 310, VMs, other than the mVM, may launch and execute a program or set of programs that facilitate and enable dynamic modifications to the resources allocated to the VMs. For example, a VM may launch and execute a monitor agent that is configured to monitor the resources used by the VM and convey the information to resource manager 122.

At 312, the system enters into a monitor phase as described above with respect to 218 in Fig. 2.

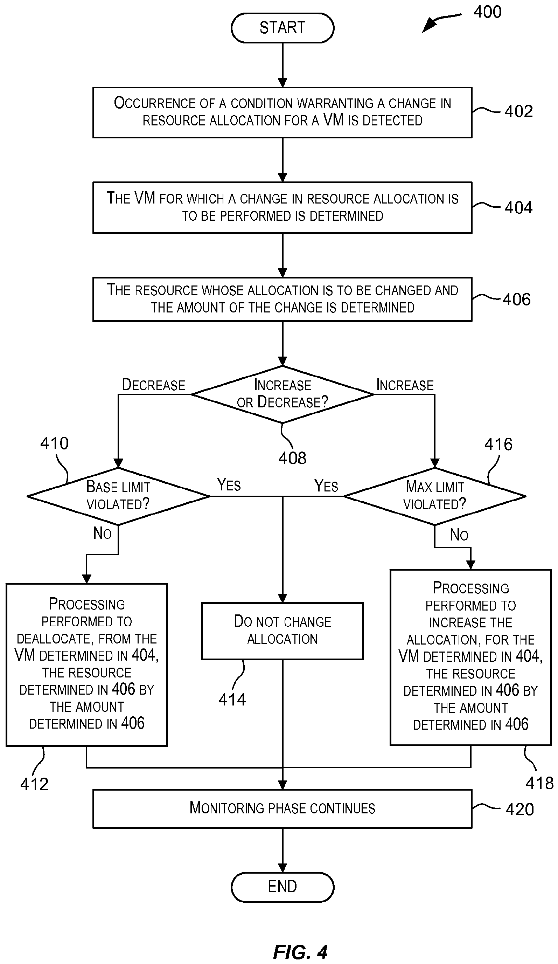

Fig. 4 depicts a simplified flowchart 400 depicting processing performed in the monitoring phase according to an embodiment of the present invention. The processing depicted in Fig. 4 may be implemented in software (e.g., code, instructions, program) executed by one or more processing units (e.g., processors, cores, certain percentage of a core), hardware, or combinations thereof. In certain embodiments, the software may be stored on a non-transitory computer-readable storage device or medium. The particular series of processing steps depicted in Fig. 4 is not intended to be limiting.

At 402, the occurrence of a condition that warrants a change in resource allocation of a VM is detected. In one embodiment, resource manager 122 executed by mVM 114 may be configured to detect conditions when resource allocation for a VM is to be modified. For example, in some instances, resource manager 122 may receive information from a monitor agent for a VM and determine based upon the received information and information in the RCF that a change in resource allocation for the VM is to be performed.

For example, resource manager 122 may receive, from a monitor agent executed by a VM, resource utilization information for a resource (or for multiple resources) used by the VM. Resource manager 122 may compare this information to the "alloc" and "free" information specified for that resource for the VM in the RCF. If the resource utilization for the resource for the VM is at or exceeds the allocation threshold specified for that resource for that VM in the RCF, resource manager 122 may identify this as a condition warranting a change in the amount of the resource allocated to that VM (in this case, warranting an increase in the amount of the resource allocated to the VM). For example, the resource configuration file depicted in Table A indicates that the "Alloc" value for CPU cores for VM₁ is "90%/60 sec". This implies that if the CPU resources allocated to VM₁ are at or go over 90% utilization over a period of 60 seconds, then additional CPU resources need to be assigned or allocated to VM₁.

As another example, if resource manager 122 receives information that the resource utilization for a resource for a VM is at or below the free threshold specified for that resource for that VM in the RCF, resource manager 122 may identify this as a condition warranting a change in the amount of the resource allocated to that VM (in this case, warranting a decrease in the amount of the resource allocated to the VM). In this manner, based upon information received from one or more monitor agents and based upon information in an RCF, resource manager 122 may determine whether a condition exists that requires a change in resource allocation for a VM.

Resource manager 122 may also monitor other conditions that may cause the amount of resources allocated to a VM to be dynamically changed without having to stop, restart, or reboot the VM. In some embodiments, changes to the resources allocated to one or more VMs provided for a user (e.g., a customer) may be made according to or in response to a Service Level Agreement (SLA) entered into by the user. An SLA entered into by a user generally identifies terms governing the level of service that is promised to the user. SLAs are very common in the communication industry between end customers and communication enablers such as network carriers, Internet Service Providers (ISPs), etc. For example, one or more SLAs are typically included in a service contract entered into between a user and a service provider. Such an SLA may set terms such as the maximum downtime that is experienced by the user for a service provided by the service provider, the maximum time taken to provide a service, the quality of service provided to the user, the mean time between failures, the throughput, various data rates, or any other measurable criterion. An SLA may thus specify the levels of availability, serviceability, performance, operation, or other attributes of the service promised by the service provider to the user. In many cases, a service contract between a user and a service provider also specifies penalties imposed on the service provider if the terms specified in an SLA are not met. Accordingly, non-compliance to an SLA usually results in penalty fees or losses to the service provider. Information related to SLAs may be stored as SLA information 130. In one embodiment, SLA information 130 may be stored in a database that is accessible to programs executed by mVM 114. SLA information 130 may also be accessible to monitor agents 124.

In certain embodiments, changes in resources allocated to one or more VMs may be made in accordance with or in response to SLA information 130. For example, a new SLA agreement may cause the resources allocated to VMs affected by the SLA to be modified. SLA information for a customer may be used to determine one or more VMs to be provisioned for the customer and the resources to be assigned to the VMs. The performance of the VMs corresponding to an SLA may then be monitored and resources to the VMs may be dynamically changed so as to ensure that performance is in compliance with the SLA terms.

A change to an existing SLA agreement may cause the resources allocated to VMs corresponding to the SLA to be modified. In such instances, resource manager 122 may be configured to monitor SLA information 130 for any such changes and trigger changes in resource allocations for one or more VMs as appropriate to be in compliance with the SLA terms. Further details are provided below in the use cases section.

As another example, resource manager 122 may monitor for failover events and when such an event is detected make appropriate changes to resources allocated to the active and passive VMs. Further details are provided below in the use cases section.

Referring back to Fig. 4, at 404, a VM whose resource allocation is to be changed responsive to the condition detected in 404 is determined. For example, if resource manager 122 determines, based upon received resource usage information and based upon the RCF depicted in Table A, that the CPU resources allocated to VM₁ are at or over 90% utilization over a period of 60 seconds, VM₁ is identified in 404 as the VM whose resource allocation is to be changed (in this case increased).

In 406, for the VM determined in 404, the resource whose allocation is to be changed and the amount by which the resource's allocation for the VM is to be changed is determined. For example, for the RCF depicted in Table A, upon determining that the CPU resources allocated to VM₁ are at or over 90% utilization over a period of 60 seconds, it may be determined in 406 that in response to such a condition, an additional CPU core is to be allocated to VM₁. As another example, for the RCF depicted in Table A, upon determining that the CPU resources allocated to VM₁ are at or below 30% utilization over a period of 60 seconds, it may be determined in 406 that in response to such a condition, a CPU core can be deallocated from VM₁.

At 408, it is determined whether the change in resource allocation is an increase in the allocation of a resource for the VM or a decrease in allocation of the resource for the VM. If it is a decrease then processing continues with 410 and if it is an increase then processing continues with 416.

At 410, a determination is made whether decreasing the allocation of the resource by the amount determined in 406 would violate the base limit threshold specified for that resource for the VM. As previously described, a base limit of a resource for a VM may be specified in the RCF. The base threshold indicates the minimum or base set of the resource required by a VM. The amount of a resource for a VM is not allowed to drop below this minimum or base level. For example, the RCF shown in Table A indicates that the base limit for CPU cores for VM₁ is 2 CPU cores. Accordingly, if it is determined in 406 that a CPU core is to be deallocated from VM₁, a check is made in 410 if such a deallocation would cause the CPU cores allocated to VM₁ to fall below the base limit of 2 CPU cores.

If it is determined in 410, that decreasing the allocation of the resource by the amount determined in 406 violates the base limit threshold specified for that resource for the VM, then per 414, the resource deallocation is not permitted. In certain embodiments, a message may be output to the user indicating that the resource deallocation could not be performed since such a deallocation would have caused the resource allocation for that VM to have dropped below the base limit.

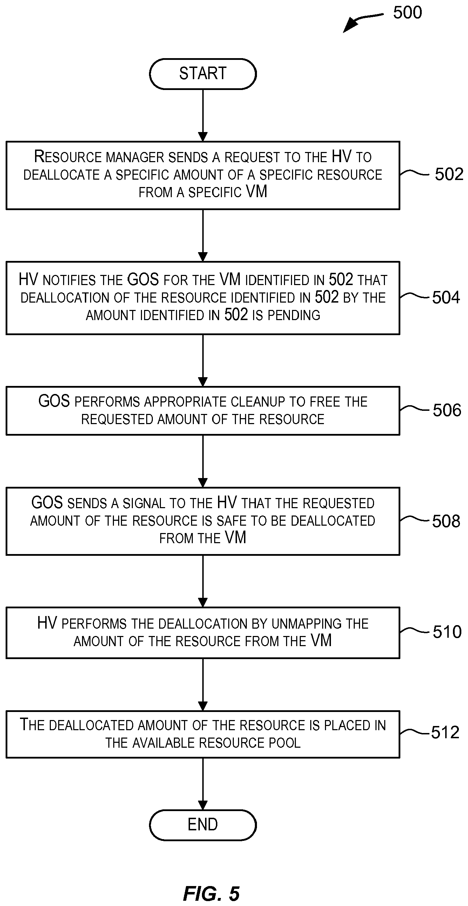

If it is determined in 410, that decreasing the allocation of the resource by the amount determined in 406 does not violate the base limit threshold specified for that resource for the VM, then at 412 processing is performed to deallocate, from the VM determined in 404, the amount of the resource determined in 406. The resource deallocation is performed in real time without having to stop, restart, or reboot the affected VM. Once the resource has been deallocated, per 420, the monitoring phase continues. As part of 412, the deallocated amount of resource may be returned to available resource pool 120. Further details related to processing performed in 412 are provided below with respect to Fig. 5.

At 416, a determination is made whether increasing the allocation of the resource by the amount determined in 406 would violate the maximum limit threshold specified for that resource for the VM. As previously described, a maximum limit of a resource for a VM may be specified in the RCF. For example, the "Max" column in Table A identifies the maximum amount of a resource that can be allocated to a VM. For example, per the RCF shown in Table A, the maximum limit for CPU cores for VM₁ is 4 CPU cores. Accordingly, if it is determined in 406 that a CPU core is to be allocated to VM₁, a check is made in 416 if such an allocation would cause the CPU cores allocated to VM₁ to go above the maximum limit of 4 CPU cores.

If it is determined in 416, that increasing the allocation of the resource by the amount determined in 406 violates the maximum limit threshold specified for that resource for the VM, then per 414, the resource allocation is not permitted. In certain embodiments, a message may be output to the user indicating that the resource allocation could not performed since such an allocation would have caused the resource allocation for that VM to have gone over the permitted maximum limit for the VM.

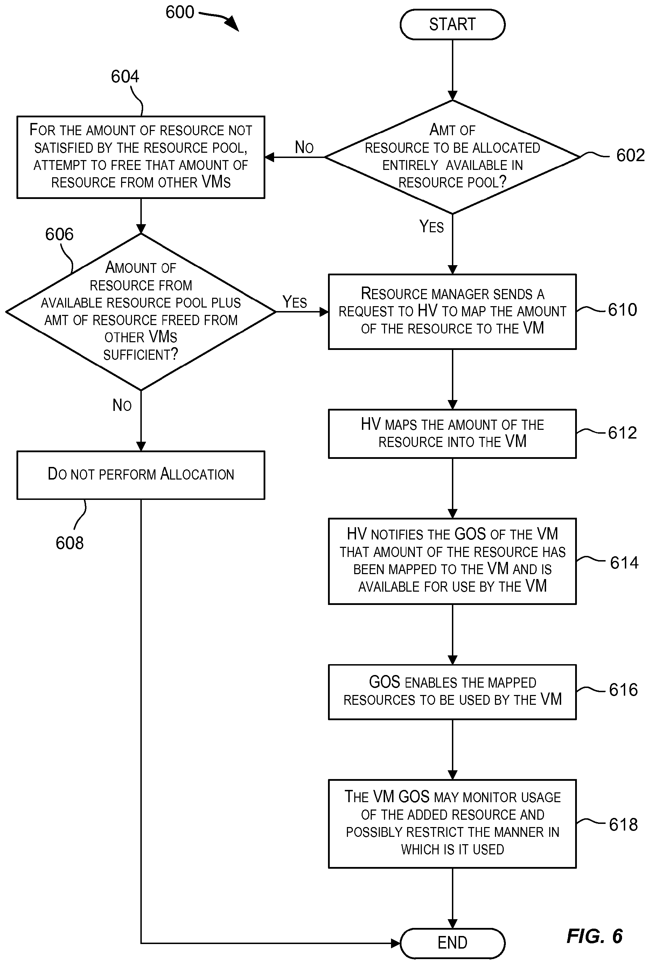

If it is determined in 416, that increasing the allocation of the resource by the amount determined in 406 does not violate the maximum limit threshold specified for that resource for the VM, then at 418 processing is performed to increase the allocation, for the VM determined in 404, of the resource determined in 406 by the amount determined in 406. The resource allocation is performed in real time without having to stop, restart, or reboot the affected VM. Once the resource has been allocated, per 420, the monitoring phase continues. Further details related to processing performed in 418 are provided below with respect to Fig. 6.

While the embodiment depicted in Fig. 4 and the accompanying description discusses how an amount of a single resource may be allocated to or deallocated from a single VM, this is not intended to be limiting. The condition detected in 402 may cause dynamic changes in resource allocations for one or more resources for one or more VMs. The processing depicted in Fig. 4 and described above may be performed for each resource for each VM.

Fig. 5 depicts a simplified flowchart 500 depicting processing performed for dynamically deallocating an amount of a resource from a VM according to an embodiment of the present invention. The processing depicted in Fig. 5 may be implemented in software (e.g., code, instructions, program) executed by one or more processing units (e.g., processors, cores, certain percentage of a core), hardware, or combinations thereof. In certain embodiments, the software may be stored on a non-transitory computer-readable storage device or medium. The particular series of processing steps depicted in Fig. 5 is not intended to be limiting.

At 502, resource manager 122 executed by an mVM (or alternatively one or more programs executed by the mVM) may send a request to hypervisor 118 to deallocate a specific amount of a specific resource from a specific VM. At 504, hypervisor 118 notifies the guest operating system (GOS) for the VM identified in 502 that deallocation of the resource identified in 502 by the amount identified in 502 is pending. In certain embodiments, the GOS may support a hotplug API (e.g., Advanced Configuration and Power Interface (ACPI)) and may receive the notification using the API. The GOS may receive an API removal notification for the resource.

At 506, upon receiving the notification from hypervisor 118, the GOS may perform processing to enable the requested amount of the resource to be deallocated from the VM. For example, the GOS may perform cleanup operations to free the amount of the resource to be deallocated. For example, if the resource is a CPU core, as part of 506, the GOS may perform processing that moves all processes and threads executed by the CPU core to be deallocated to another CPU core allocated to the VM. If the resource to be deallocated is a portion of system memory, as part of 506, the GOS may move any data or processes stored in the portion of the system memory to another portion of the system memory allocated to the VM. If the resource to be deallocated is non-volatile memory (e.g., disk storage), as part of 506, the GOS may move any data stored in the portion of the non-volatile memory to be deallocated to another portion of the non-volatile memory allocated to the VM. If the resource to be deallocated is a network port, as part of 506, the GOS may perform operations that take that port offline so that it is not used and can be deallocated. When removing network ports, any network routes used by the ports may be rerouted to other remaining ports. Then the network port can be taken offline. If the resource to be deallocated is network bandwidth, as part of 506, the GOS may In certain embodiments, the network bandwidth for a VM depends upon corresponding CPU and memory resources to process it. In one embodiment, network bandwidth can be changes by reducing (to decrease bandwidth) or increasing (to increase bandwidth) the CPU and memory resources. When the resource change requires modifying hardware device configuration, the mVM or other designated "supervisor" VM may make the changes to hardware. This may be done to provide protection from an ordinary VM misconfiguring the hardware that would affect all VMs on the system.

After the necessary cleanup has been performed in 506, at 508, the GOS sends a signal to hypervisor 118 that the requested amount of the resource is now safe to be deallocated from the VM. At 510, hypervisor 118 then performs the deallocation by unmapping the amount of the resource to be deallocated from the VM and manages hardware devices.

At 512, the amount of the resource that has been deallocated may be placed in the available resource pool and made available for allocation to some other VM.

In the manner described above, programs executed by the mVM such as resource manager 122 in cooperation with the hypervisor may perform processing related to deallocation of resources from a VM. These changes in resource allocation are performed dynamically in real time without having to stop, reboot, or restart the VM. This facilitates better utilization of limited resources between various resource consumers.

Fig. 6 depicts a simplified flowchart 600 depicting processing performed for dynamically allocating an amount of a resource to a VM according to an embodiment of the present invention. The processing depicted in Fig. 6 may be implemented in software (e.g., code, instructions, program) executed by one or more processing units (e.g., processors, cores, certain percentage of a core), hardware, or combinations thereof. In certain embodiments, the software may be stored on a non-transitory computer-readable storage device or medium. The particular series of processing steps depicted in Fig. 6 is not intended to be limiting.

At 602, a check is made if the amount of the resource that is to be allocated to a VM is entirely available from the available resource pool. The check may be performed by a program executed by the mVM such as resource manager 122. If it is determined in 602 that the amount of the resource that is to be allocated to a VM is entirely available from the available resource pool then processing proceeds with 610, else processing proceeds with 604.

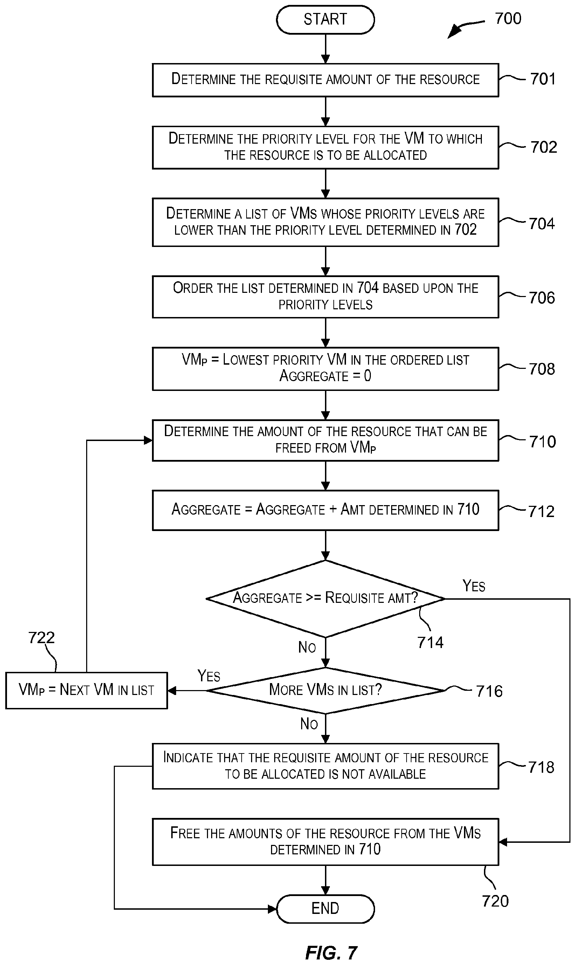

In 604, for the amount of the resource to be allocated that is not available from the available resources pool, attempts are made to free that amount of resources from other VMs that may be executed by the device. Various different techniques may be used to free resources from other VMs. The freed resource may be placed in the available resource pool. One such technique is depicted in Fig. 7 and described below. This technique is however not intended to be limiting. Various other techniques may also be used.

At 606, a check is made to see if the amount of the resource available from the available resource pool plus the amount of the resource freed from other VMs satisfies the amount of resource to be allocated. If sufficient, then processing proceeds with 610, else the allocation is not performed per 608 since there is not sufficient resource available to go through with the allocation. An error message may be output in 608 indicating that the change in resource allocation cannot be performed.

In 610, resource manager 122 sends a request to hypervisor 118 to map the amount of source from the available pool to the VM to which the resource is to be allocated. In 612, hypervisor 118 maps the amount of the resource into the VM. At 614, hypervisor 118 may notify the GOS of the VM to which the resource is being allocated that the amount of the resource has been mapped to the VM and is available for use by the VM. In certain embodiments, a GOS supporting a hotplug events API (e.g., ACPI) may receive a notification using the API that the mapped resource is available for use by the VM. At 616, the GOS may perform processing to enable the newly mapped resource to be used by the VM. In certain embodiments, if an error condition occurs during the processing described above, such as if the VM cannot honor the request, the VM may be restarted, and failover or some other corrective action may be initiated.

In certain embodiments, some restrictions may be placed on the manner in which the newly mapped resource portion is used by the VM. For example, in some embodiments, the VM may be restricted from using the newly mapped resources in a manner that does not allow the resource to be unmapped from the VM and made available to the available resource pool, as and when needed. For example, if the newly allocated resource is system memory, in one embodiment, the memory may not be used as a target for external direct memory access (DMA) devices or for storing immovable kernel objects since doing so could prevent the memory from being safely removed from the VM. Accordingly, at 618, the GOS may monitor the usage of the newly allocated resource by the VM and restrict the manner in which the resource is used.

In certain embodiments, the GOS handles the resource mapping/unmapping. If for some reason the resources cannot be mapped/unmapped correctly, corrective actions may include shutting down and restarting the VM.

As described above, programs executed by the mVM such as resource manager 122 in cooperation with the hypervisor and the GOSs of the VMs and monitor agents executed by the VMs may perform processing related to allocation of resources for a VM. These changes in resource allocation are performed dynamically without having to stop, reboot, or restart the VM to which the resource is being allocated. Further, if the available resource pool does not have a sufficient amount of the resource to be allocated, attempts are made to free the needed amount of the resource from other VM. Resources freed from the other VMs are added to the available resource pool for allocation to the VM. The freeing of resources from the other VMs may also be performed without having to stop, reboot, or restart these other VMs. In this manner, allocations and deallocations are performed in real time without severely impacting any VM while enabling better utilization of limited resources between the VMs.

As described above, various different techniques may be used to free resources from other VMs and make these resources available to the VM to which the resources are to be allocated. Fig. 7 depicts a simplified flowchart 700 depicting a priority-based technique for dynamically freeing resources from VMs and making them available for allocation to a VM according to an embodiment of the present invention. The processing depicted in Fig. 7 may be implemented in software (e.g., code, instructions, program) executed by one or more processing units (e.g., processors, cores, certain percentage of a core), hardware, or combinations thereof. In certain embodiments, the software may be stored on a non-transitory computer-readable storage device or medium. The particular series of processing steps depicted in Fig. 7 is not intended to be limiting.

At 701, a requisite amount of the resource that needs to be freed and made available for allocation is determined. In certain embodiments, the requisite amount is the amount of the resource that needs to be allocated to a VM minus the amount of the resource that is available in the available resource pool. For example, if 3 GB of system memory is to be allocated to a VM and only 1 GB is available from the available resource pool, then the requisite amount of the memory that needs to be freed or deallocated and made available for reallocation is (3 - 1) = 2 GB.

At 702, the priority level of the VM to which the resource is to be allocated is determined. In one embodiment, the priority level information for VMs may be provided in a RCF. For example, the RCF depicted in Table A comprises a "Priority" column that specifies the priorities for VMS. For example, per Table A, the priority for VM₁ is high, the priority for VM₂ is medium, and so on.

At 704, a list of VMs is determined having priority levels lower than the priority level determined in 702. At 706, the list of VMs determined in 704 is ordered based upon the priority levels.

At 708, variables may be initialized for further processing. For example, a "VM_{P}" variable may be used to represent a VM from the ordered list being processing. The VMp may be initialized to the VM to the lowest priority VM in the ordered list. Another variable "Aggregate" is set to zero.

Per 710, 712, 714, 716, and 722, starting with the lowest priority VM in the list, the VMs in the ordered list are iterated to determine, for each VM, the amount of the resource that can be freed from the VM. This iteration continues until the requisite amount of the resource that is to be allocated can be freed and made available for allocation. Accordingly, at 710, starting with the lowest priority VM in the ordered list, the amount of the resource that can be freed from VM_{P} is determined. While making this determination, the base limit of the resource for VM_{P} may be considered to ensure that, after the freeing of the resource, the total amount of the resource still allocated to VM_{P} does not fall below the base limit for that VMp.

At 712, the amount of the resource that can be freed, which is determined in 710, is added to the Aggregate variable. In this manner, the Aggregate variable keeps tally of the total amount of the resource that can be freed from the various VMs in the ordered list of VMs.

At 714, a check is made if the Aggregate is greater than or equal to the requisite amount. If yes, then at 720, the amounts of the resource determined in 710 for the various iterations for the various VMs from the list are freed or deallocated from the VMs. In one embodiment, deallocation of the resource from the one or more VMs may be performed according to the processing depicted in Fig. 5 and described above. The deallocated resources may be reverted back to the available resource pool. Processing may then revert back to 606 in Fig. 6 and then continue with 610.

If it is determined in 714, that Aggregate is still less than the requisite amount, then a check is made at 716 to see if there is any VM in the ordered list of VMs generated in 706 that have not yet been processed according to 710 and 712. If at least one such VM exists, then at 722 the VMp variable is set to the next unprocessed VM in the ordered list of VMs with the lowest priority. Processing then continues with 710 using the new VM_{P}.

If it is determined in 716 that all the VMs in the ordered list have been processed, it implies that there are no more VMs available for freeing the resource. Since the Aggregate is still less than the requisite amount, it implies that the requisite amount cannot be satisfied by the VMs in the list. Accordingly, at 718, an indication may be conveyed that the requisite amount of the resource cannot be met by freeing the resource from the VMs in the list of VMs. In such a scenario, processing may continue with 606 (in Fig. 6) wherein it is determined that the amount of the resource available from the available resource pool plus the amount of the resource freed from other VMs is still less than the amount of resource to be allocated. The resource allocation may then not be performed per 608.

In certain embodiments, the processing depicted in 702, 704, 706, 708, 710, 712, 714, 716, 718, and 716 may be performed by one or more programs executed by the mVM such as by resource manager 122. The processing in 720 may be performed by resource manager 122 in conjunction with hypervisor 118.

In certain embodiments, a "reclaimable" level priority may be assigned to one or more VMs, representing the lowest priority level. The mVM can shut down a VM that is marked as "reclaimable" and reclaim all of the VM's resources and make the resources available for allocation to other higher priority VMs.

The processing depicted in Fig. 7 and described above assumes that priorities are assigned on a per VM basis. However, as described above with respect to Table B, a priority may be specified on a per VM per resources basis. In such an embodiment, in 702, the processing may determine the per VM-per resource priority for the resource to be allocated. In 704, a list of VMs is determined having a per VM-per resource (for the resource being allocated) priority that is lower than the per VM-per resource priority determined 702. This list of VMs is then processed and their per VM-per resource priorities for the resource being allocated used for the processing.

As described above, the resource allocated to a VM can be dynamically changed (e.g., increased or decreased) without having to stop, reboot, or restart the VM. The resources may include various types of resource including, but not limited to, processing resources, system memory resources, network resources such as network bandwidth resources and ports, non-volatile memory resources, input/output (I/O) resources, and others.

### Processing Resources

A device or system may provide one or more processing units that represent the processing resources for the device or system. These processing units may be one or more processors, one or more CPU cores, a certain percentage of a core, and combinations thereof. For example, in a system or device comprising one or more multicore CPUs, the basic processing unit may be a CPU core and one or more CPU cores may be allocated to each VM. These one or more processing units may be dynamically added or removed from a VM. In one embodiment, when instructed by the mVM, hypervisor 118 maps one or more cores into a VM and notifies the GOS for the VM. The additional cores will then be brought online by the GOS and made available for use by the VM.

In certain embodiments, to safely remove one or more cores from a VM, the underlying GOS is notified of the pending core removal. For a core to be removed, the GOS migrates all processes running on that core to other cores in the VM and takes the designated core offline. Hypervisor 118 can then remove or deallocate the core from the VM and place it in the available resource pool. In some embodiments, if an error occurs in taking a core offline, the core may not be removed from the GOS and the VM may be marked as faulty. One or more corrective actions may then be initiated, for example, by programs such as resource manager 122 executed by the mVM. These actions may include, for example, halting and restarting the faulty VM.

### System Memory (e.g., RAM)

In some embodiments, memory (commonly referred to as system memory or RAM) can be dynamically added and/or removed from a VM. In one embodiment, the memory is added and/or removed in fixed sized chunks. The size of a memory chunk may be determined from the size supported by the underlying GOS for the VM. In one embodiment, to add memory to a VM, programs such as resource manager 122 executed by the mVM may request hypervisor 118 to map one or more memory chunks to a VM. Hypervisor 118 then notifies the underlying GOS that additional memory is available for use.

The GOS of the VM to which the memory has been allocated may monitor how the additional dynamic memory is used. In one embodiment, the memory is not to be used as a target for external DMA devices or for storing immovable kernel objects since doing so could prevent the dynamic memory from being safely removed.

In some embodiments, to remove the dynamic memory from a VM, hypervisor 118 notifies the GOS of the pending memory removal. The GOS then migrates all data stored in the pending memory to other memory regions or swaps the memory to disk. Once completed, the memory can then be taken offline and hypervisor 118 can return the memory to the available resource pool.

In some instances, it is possible that the GOS may hit an out of memory condition while relocating data structures. In such a scenario, the GOS proceeds with normal out of memory procedures to recover enough free memory to complete the relocation. The request to remove dynamic memory from a VM is not expected to fail. If an error occurs, the VM may be faulted and it may be halted and restarted by one or more programs such as resource manager 122 executed by the mVM.

### Network Resources

Various network resources may be dynamically allocated to or deallocated from a VM such as the amount of bandwidth a VM is allowed to consume, the number of external network ports exclusively owned by the VM, and the like.

### (1) Network Bandwidth

Each VM may have its own set of ingress rate limit parameters. This set of parameters may be used to control the rate of traffic received by the VM. Programs executed by the mVM may adjust the rate limit parameters to increase or decrease the amount of data traffic received by each VM. Different types of flows can have different rate limiting parameters. A set of egress traffic shaping parameters may be available for each VM. This set of parameters controls the rate of traffic transmitted by the VM. One or more programs executed by the mVM may adjust the traffic shaping parameters to increase or decrease the transmit data rate of a VM.

### (2) Ports

In a virtualized environment, each VM needs access to its own set of data ports. Programs executed by the mVM such as resource manager 122 may enable external ports to be added and/or removed from each VM. In some embodiments, to allow VMs to directly configure and manage flows on the external ports, resource manager 122 may configure the forwarding hardware to map data ports to the control interface owned by the VM.

### Non-volatile memory

In certain embodiments, a single non-volatile memory (e.g., a storage device) may be shared by multiple VMs on a system. In such a scenario, hypervisor 118 may provide virtualized access to the single non-volatile memory. VMs may use a virtual storage device driver to perform disk I/O via hypervisor 118. Each VM may have its own private disk partition. To allow dynamic resizing of the disk partitions, hypervisor 118 may partition the storage device into equal sized logical blocks. For a VM to support dynamic disk partition changes, the underlying GOS of the VM may support logical volume manager (LVM) or equivalent technology.

In some embodiments, one or more programs executed by the mVM such as resource manager 122 may dynamically increase the amount of storage space allocated to a VM. Hypervisor 118 may increase a VM's logical partition size by mapping in an unallocated logical block. The GOS of the VM is notified of the additional storage and it can use LVM to expand its disk partition size.

In some embodiments, safely removing storage space from a VM may require an administrator to remove unneeded files to allow a complete logical block to be deallocated without loss of data.

### I/O Resources

In certain embodiment, a virtualized driver may be implemented in hypervisor 118 to allow sharing of the device between VMs. Resource manager 122 executed by the mVM may instruct hypervisor 118 to dynamically move devices between VMs. The underlying GOS may support hot plugging of the device type. Hardware devices that do not support native virtualization (e.g., SR-IOV where part of the chip can be allocated to different VMs) are exclusively owned by one VM or virtualized within the hypervisor.

### Example Use Cases

### (1) Address system scalability in a flexible manner

Currently, if a system's scalability requirements are to be increased, the only mechanism to do this is to build or add more powerful hardware (HW) to the system. In a system or device that can execute multiple VMs, each VM can act and function as a separate virtual system. In this manner, a physical device can provide multiple virtual systems, each virtual system with its own set of allocated resources. Enabling dynamic allocation and deallocation of resources to a virtual system enables the resources assigned to the virtual system to be dynamically changed to meet scalability requirements without having to add more hardware to the system. The ability to dynamically allocate resources to VMs thus opens up new ways in solving system scalability problems, without having to build or add new hardware each time.

For example, a base system may ship with "n" number of cores of which "m" cores (where "m" is less than "n") may be allocated to a VM acting as a virtual system. This virtual system may be certified to scale up to "x" number of devices in the network. If later the user requires the system scalability to go beyond "x", then this upgrade may be performed by dynamically allocating additional available cores to the VM. The newly allocated cores are dynamically hot-plugged to the VM.

### (2) Virtual Router (VR)

A VM may execute programs that perform the functions of a router or switch. In this manner, each VM may act as an individual virtual router (VR) or a switching device. Since a device or system can execute multiple VMs in parallel, several such VRs can coexist on a system in parallel sharing the system's resources. The VRs may be provisioned to different customers (or tenants). For example, a first VR may be provisioned to a first tenant while a second VR may be provisioned to a second tenant. In this manner, a single system or device providing multiple VRs can provide services for multiple tenants and multiple applications.

The amount of processing done by a VR can vary over time. For example, a VR may generally not be very active as most of the routing-related work may be handled directly by routing hardware that is customized to perform routing functions. In this phase, a VR may only need a minimal or base set of resources. However, there are times when a VR can become very busy and end up being resource bound or starved by the base set of resources. Having the ability to dynamically allocate additional resources to a VR allows it to scale up to meet heavy demand when needed. In this manner, as the need arises, additional resources may be dynamically allocated to a VR as the VR's need for resources rises.

In a system executing multiple VRs, the ability to dynamically allocate and deallocate resources to the VRs enables resources to be allocated on a need-based basis. Further, since the total resources in a system are generally fixed, the ability to deallocate a resource from a VR that is not so active to a VR that is busy enables the resource to be efficiently used and shared between the VRs. This provides a significant competitive advantage since more VRs can be serviced by the same hardware. Further, the VRs are more responsive during spikes in demand. In certain embodiments, VRs can also be assigned different resource levels according to individual SLAs. There is also no need to pre-allocate all the resources (or statically allocate resources) to a VR since the system can adapt dynamically to the needs.

### (3) Virtual High Availability (HA)

Modern network architectures strive to provide solutions where the routing or forwarding functions are not interrupted by network or network device failures. One technique of increasing the availability of a system (referred to as high availability) is by providing redundancies. For example, a network device may comprise two processors where one of the processors is configured to operate in an "active" mode and the other configured to operate in a "passive" (or standby) mode. The processor operating in active mode (referred to as the active processor) is generally configured to perform a full set of networking functions while the processor operating in passive mode (referred to as the passive processor) is configured to not perform the full set of networking functions or to perform only a small subset of the functions performed by the active processor. Upon an event that causes the active processor to reboot or fail (referred to as a failover event), which may occur, for example, due to an error in the active processor, the passive processor takes over as the active processor and starts to perform functions performed in active mode. In this manner, the networking functions that are performed by an active processor are not interrupted by the failover. The previous active processor becomes the passive processor.

The active-passive model may be implemented in a system executing multiple VMs thereby providing virtual high availability. A first VM executed by a system may be configured to be in active mode and execute programs that perform functions that are performed in active mode. A second VM executed by the same system may be configured to operate in passive mode where the functions performed by an active VM are not performed by the second "passive" VM or alternatively, the second "passive" VM may only perform a small subset of the functions performed by the active VM (i.e., some functions performed by the active VM are not performed by the passive VM). Accordingly, when operating in active mode, the active VM may execute one or more programs that perform the functions performed in active mode. The active mode functions are either not performed by the passive VM or only a subset of the active mode functions may be performed by the passive VM (i.e., the passive VM does not perform some functions that are performed by the active VM).

Since the active VM performs more functions than the passive VM, it needs more resources than the passive VM. Without the ability to dynamically allocate or deallocate resources, the resources had to be assigned to the active and passive VMs statically when the VMs were created. This static allocation results in substantial resource wastage. For example, since any of the VMs can operate in active mode, both the VMs had to be statically assigned sufficient resources to support active mode processing. However, as a result of the static allocation, when operating in passive mode, the resources allocated to the passive VM are under-utilized. In a static configuration, the active VM cannot utilize the spare resources of the passive VM, which are underutilized by the passive VM.

In certain embodiments of the present invention, the ability to dynamically allocate and deallocate resources between VMs may be used to automatically increase the amount of resources allocated to an active VM and to automatically deallocate amounts of resources from the passive VM. In one embodiment, the amount of a resource deallocated from a passive VM may be allocated to an active VM.

In one such embodiment, a user may simply specify the amounts of resources for an active VM and the amounts of resources for the passive VM. For example, the user may specify that 75% of the resources in a system (e.g., 75% of processing and system memory resources, etc.) are to be allocated to the active VM and 25% of the resources are to be allocated to the passive VM. In one embodiment, these amounts may be specified in the RCF. These specified amounts of the resources are then allocated to the VMs when the VMs are launched. For example, a first VM operating as an active VM may be allocated 75% of the resources when the first VM is launched. A second VM operating as a passive VM may be allocated 25% of the resources. Later, when a failover event occurs the second VM may become the active VM and the first VM may become the passive VM. In such a scenario, one or more programs executed by the mVM such as resource manager 122 may be configured to automatically deallocate resources from the first VM (which is now the passive VM) and allocate additional resources to the second VM (which is now the active VM) such that at the end of the failover the second, now active, VM has 75% of the resources allocated to it and the first, now passive, VM has 25% of the resources allocated to it. In this manner, the resources allocated to an active VM follow the VM that is active and likewise the resources allocated to a passive VM follow the VM that is passive. The mVM resides on the VM that is active, i.e., on the active VM. During a failover, the mVM switches to the new active automatically.

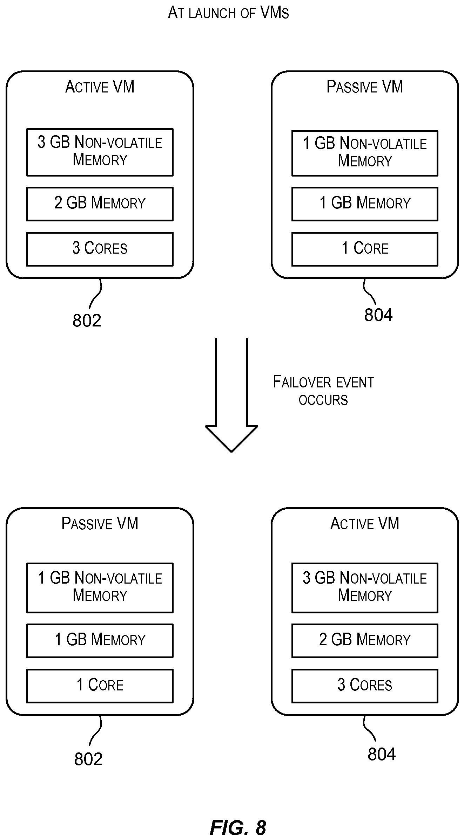

Fig. 8 shows an example of automatic dynamic resource allocation between an active VM and a passive VM according to an embodiment of the present invention. As shown in Fig. 8, a VM 802 may be launched as an active VM and allocated 3 CPU cores, 2 GB system memory, and 3 GB of non-volatile memory by hypervisor 118 when VM 802 is launched. A VM 804 may be launched as a passive VM and allocated 1 CPU core, 1 GB system memory, and 1 GB of non-volatile memory by hypervisor 118 when VM 804 is launched.

Information specifying the resources to be allocated to the active VM and to the passive VM may be stored in a location accessible to hypervisor 118 (or to resource manager 122). For example, the information may be stored in an RCF. In one embodiment, hypervisor 118 may be configured to access this information and launch VM 802 as the active VM and allocate to it resources specified for the active VM and launch VM 804 as the passive VM and allocate to it resources specified for the passive VM.

In another embodiment, resource manager 122 executed by the mVM may be configured to read active and passive VM resource allocation information. Resource manager 122 may then convey this information to hypervisor 118, which is then configured to launch the VMs and allocate the specified resources at the time of launch.

At some point after the launch, a failover event may occur. The failover event may be voluntary (e.g., caused by a system administrator) or involuntary (e.g., caused by an error in the system). As a result of the failover, VM 804, which was previously the passive VM, may now become the active VM and VM 802, which was previously the active VM, may become the passive VM, as shown in Fig. 8. Upon a failover, the resource allocations to VMs 802 and 804 may be automatically changed such that the new active VM 804 gets allocated the resources specified for an active VM and the new passive VM 802 gets resources specified for a passive VM. For example, as shown in Fig. 8, additional resources are allocated to active VM 804 such that it has 3 CPU cores, 2 GB system memory, and 3 GB of non-volatile memory. Resources are deallocated from VM 802 such that it has 1 CPU core, 1 GB system memory, and 1 GB of non-volatile memory.

In some embodiments, these changes may be automatically performed by resource manager 122 working in association with hypervisor 118. Upon a failover, resource manager may determine the VM that is the active VM and the VM that is the passive VM and determine the amounts of resources to be allocated to each. Resource manager 122 may then convey the information to hypervisor 118, which may migrate one or more resources (by deallocating the resources) from the previous active VM 802 and to the new active VM 804 (by allocating the deallocated resources to the active VM). In embodiments, the hot plug support for the resources (e.g., CPU and memory resources) may be provided by Linux GOSs.

In this manner, the resources that are meant to be allocated to the active VM are assigned to or follow the VM that is operating in active mode. Similarly, resources that are meant to be allocated to the passive VM follow the VM that is operating in passive mode. This ability to automatically change the resources allocated to an active and a passive VM provides several benefits. It enables virtual high availability to be implemented with the same cost as a non-high availability system. This enables a system provider to provider superior reliability and availability over competitors for minimal extra cost.

Virtual high availability using dynamic reallocation of resources can be deployed on various different systems including but not limited to a single multicore CPU systems (e.g., in a pizza box system), systems with multiple CPUs with one or more cores, chassis-based systems, and the like. For example, in a chassis-based network device comprising one or more linecards and one or more management cards, virtual high availability using dynamic resource allocation may be provided at the line card level or at the management processor level.

### (4) Dynamic FlexNOS Platform

A FlexNOS is generally configured to allow third party developers to build custom applications that will run on system hardware, such as hardware provided by Brocade Communications Systems, Inc. of San Jose, California. FlexNOS is particularly well suited to run within a VM as it helps isolate third party applications from the rest of the system. The ability to dynamically allocate resources to a FlexNOS VM provides several benefits. It enables more FlexNOS VMs to be serviced by the same underlying hardware. Since the resource allocations can be performed on an as-needed basis, it enables FlexNOS VMs to be more responsive during spikes in demand and there is no need to over provision resources to a FlexNOS VM. Further, different resource level SLAs can be assigned a FlexNOS VM.

### (5) SLA Management

As indicated above, a Service Level Agreement (SLA) entered into by a user generally identifies terms governing the level of service that is promised to the user. An SLA may comprise terms related to levels of availability, serviceability, performance, operation, or other attributes of the service provided by the service provider to the user. Customers are many times charged based upon the terms of an SLA. For example, a higher charge may be associated with an SLA promising a higher level of service than an SLA promising a lower level of service. Since customers have to pay for the level of service promised by SLAs, the SLAs also generally specify penalties (e.g., in penalty fees) imposed on the service provider if the terms specified in an SLA are not met. Being in compliance with SLAs is thus very important for service providers.

An SLA term may identify a service-related criterion and a measurable threshold or range associated with the criterion. Examples of criteria include without limitation: downtime that is experienced by the user for a service, the time taken to provide a service, the quality of service provided to the user, the mean time between failures, the throughput, various data rates, or any other measurable criterion. A criterion may be related to various parameters such as the level of availability, serviceability, performance, operation, or other attributes of the service provided by the service provider. A threshold or a range may be associated with each criterion and may indicate the expected or promised level of service for that criterion. If the measurable level of service for a criterion degrades beyond the threshold associated with the criterion or outside the range associated with the criterion, the service being provided may be deemed to be non-compliant or in violation of the SLA for that criterion.

A service provided by a service provider, and which may be covered by an SLA, may map to processing performed by one or more VMs. These VMs may be executed by one device or system or may be spread across multiple devices or systems. The terms of the SLA may determine the number of VMs to be used and the resources to be allocated to the VMs for providing service in compliance with the SLA. For example, in one embodiment, resource manager 122 may be configured to map the terms in an SLA to a number of VMs and resources to be allocated to the VMs when the VMs are launched.

Referring to Fig. 1, in certain embodiments, SLA information 130 may store information for one or more SLAs. Resource manager 122 may use this information to determine, for each SLA, the number of VMs to be launched for the SLA and the resources to be allocated to the VMs at the time of launch. The VMs may then be launched by resource manager 122 in conjunction with hypervisor 118 as depicted in Fig. 2 and described above.

The launched VMs for an SLA may then be monitored by monitor agents 124 executed by the VMs. One or more monitor agents, acting individually or cooperatively, may monitor the operations of one or more VMs in the context of terms provided in the SLA. In one embodiment, a monitor agent may be configured to monitor a VM (or set of VMs) to determine whether operation of the VM (or VMs) is in compliance with the SLA terms and convey the relevant information to resource manager 122. Resource manager 122 may thus periodically receive from the monitor agents 124 executed by VMs corresponding to an SLA information related to the resources used by the VMs.

Based upon information received from the monitor agents, resource manager 122 may determine if resources allocated to one or more of the VMs are to be dynamically increased or decreased such that compliance with the SLA is maintained. In certain embodiments, resource manager 122 may be configured to detect, based upon information received from the monitor agents 124, whether one or more terms of the SLA are being violated or are in danger of being violated. Resource manager 122 may then take corrective actions. These corrective actions may include causing the resource allocations of one or more of the VMs to be dynamically changed such that the service being provided by the VMs is SLA compliant. Changes to the resource allocations for the VMs may be performed as described above with respect to Figs. 3, 4, 5, 6, and 7 and are performed in real time without having to stop, reset, or reboot the VMs. For example, if resource manager 122 determines that the quality of service is deteriorating and is in danger of falling below the SLA-promised threshold, then resource manager 122 may cause hypervisor 118 to increase the processing resources allocated to one or more of the SLA-related VMs to boost up the quality of service.

The terms of an SLA may also change or be modified over time. These changes may be reflected in SLA information 130 in Fig. 1. Resource manager 122 (or other programs executed by mVM 114) may be configured to monitor SLA information 130 for any such changes and take appropriate actions. These actions may include, without limitation, changing the number of VMs for providing an SLA-related service, changing the resource allocations of one of more SLA-related VMs, and the like. The ability to dynamically change resource allocations of one or more VMs thus enables the system to dynamically adapt to SLA information and ensure that the overall service provided meets the SLA terms.

The VMs affected by an SLA may be executed by one system or may be executed by multiple systems or devices communicatively coupled to each other via a network. Examples of a network include the Internet, a local area network, an enterprise network, and others. For VMs executing locally within a single system or device, the monitoring and management of the VMs, including dynamically changing the resource allocations for the VMs may, in certain embodiments, be handled by one or more programs executed by local mVM 114, such as resource manager 122, executing on the system or device. Resource manager 122 may use SLA information 130 and information received from the monitor agents executed by the VMs to perform these monitoring and management activities. When a change in resource allocation to a VM is to be performed or if a new VM is to be launched, resource manager 122 may send a signal to hypervisor 118, which may then perform the allocation/deallocation operations or launch a new VM per the methods depicted in Figs. 2-7 and their accompanying descriptions.

In certain embodiments, policies may be configured that specify how the information for an SLA is to be mapped to VMs and resources allocated to the VMs. These policies may be stored in policy information 132 and used by resource manager 122 for performing the monitoring and management activities. In one embodiment, given information for an SLA, the policies may specify how the SLA information is to be mapped to VMs to be launched for the SLA and also resources to be allocated to the VMs. The policy information may also specify conditions when resource allocations to the VMs are to be dynamically changed. For example, an SLA might state a web server must handle 100,000 pages/second. If the monitoring agent is observing only 90,000 pages/second and the configured resources are fully utilized (e.g., CPU is at 100%), it can request more CPU cores to honor the SLA.

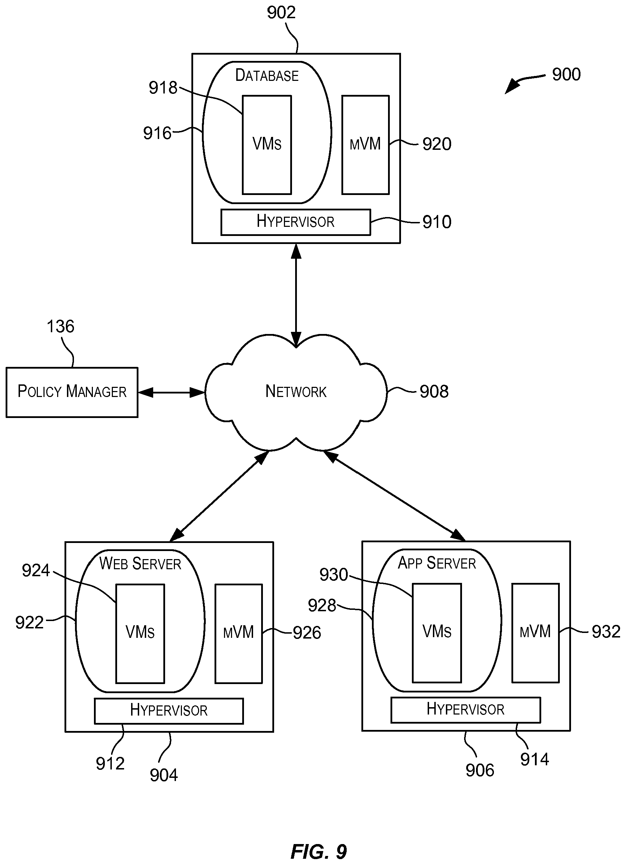

VMs corresponding to an SLA may also be distributed across a network and be executed by multiple systems or devices. This may be the case, for example, when an SLA for a customer covers several services provided to the customer including but not limited to networking services, application services, storage services, and the like. For example, the SLA may apply to an application server, a database, and a web server for the customer. These servers and databases may be executed on different systems or devices using multiple VMs. Fig. 9 shows an example of such a networked environment 900 in which VMs corresponding to an SLA may be spread across multiple networked systems according to an embodiment of the present invention. For the embodiment depicted in Fig. 9, a customer may have signed an SLA with a services provider for database services, application services, and web server services. These services may be provided by multiple systems. As shown in Fig. 9, database services 916 may be provided by system 902, web server services 922 may be provided by system 904, and application server services may be provided by system 906. Systems 902, 904, and 906 may be communicatively coupled to each other via network 908. Network 908 can be of various types including but not limited to the Internet, a local area network, an enterprise network, a wide area network, and the like. Network 908 may use wired or wireless communication links.

A database 916 offering database services may be provided by system 902. The database services may be implemented using one or more VMs 918 executed by system 902. A local hypervisor 910 may facilitate the creation and management of VMs on system 902. An mVM 920 may also be executed locally by system 902 for executing one or more programs (e.g., a resource manager) that enable dynamic changes to be made to resources allocated to VMs 918.

One or more web servers 922 offering web server services may be provided by system 904. The web server services may be implemented using one or more VMs 924 executed by system 904. A local hypervisor 912 may facilitate the creation and management of VMs on system 904. An mVM 926 may also be executed locally by system 904 for executing one or more programs that enable dynamic changes to be made to resources allocated to VMs 924.

One or more application servers 928 offering application services may be provided by system 906. The application services may be implemented using one or more VMs 930 executed by system 906. A local hypervisor 914 may facilitate the creation and management of VMs on system 906. An mVM 932 may also be executed locally by system 906 for executing one or more programs that enable dynamic changes to be made to resources allocated to VMs 930.

For VMs local to a system, dynamic changes to resources allocated to the VMs may be handled by programs executed by the local mVM in association with the local hypervisor. For example, for VMs local to system 902 such as VMs 918, dynamic allocation of resources between the VMs may be handled by programs executed by mVM 920 in association with local hypervisor 910.

In certain embodiments, a policy manager 136 is provided for monitoring and coordinating the operations performed by the various networked mVMs. Policy manager 136 can reside on a separate server from the systems executing the various VMs for an SLA, or may also be executed by a separate VM on one of the systems executing the VMs for the SLA. For example, referring back to Fig. 1, a special policy VM (pVM) may be launched by hypervisor 118 for executing programs such as policy manager 136 that perform policy management functions.

For an SLA, policy manager 136 may be configured to monitor and coordinate the operations performed by the VMs corresponding to the SLA, where the VMs may be spread across multiple systems. All the mVMs controlled by a pVM may be considered as belonging to the same domain. There could be multiple such pVMs, each controlling its own domain. Policy manager 136 is configured to monitor and coordinate the various mVMs. Policy manager 136 may dynamically adjust policies used by the mVMs to ensure that the customer SLA terms are met. This enables dynamic changes to resources allocated to the VMs to be coordinated across multiple systems.

In certain embodiments, policy manager 136 may perform the coordination activities based upon policy information 132 for the SLA. Policy manager 136 may map the SLA information to a set of VMs to be launched on the multiple systems and the resources to be allocated to the VMs upon launch. Policy manager 134 may then communicate this information to the individual mVMs on the multiple systems such that each mVM, in cooperation with the hypervisor local to the mVM, can launch the local VMs with the appropriate resources. Policy manager 136 may then in association with the local mVMs monitor and manage the VMs including resources allocated to the VMs. In this manner, policy manager 136 helps to enforce SLA requirements across multiple VMs across multiple systems by coordinating the allocation of resources to the VMs made by the mVMs. In certain embodiments, the coordinating activities may involve moving whole VMs across systems to satisfy SLA requirements.

By providing mVMs that handle resource allocations local to a system or device and by having a policy manager for monitoring and coordinating resource allocations across multiple systems, certain embodiments of the present invention provide support for SLAs for multi-tiered applications provided using multi-tiered virtualization. There is no need to statically assign resources to VMs. Instead, the ability to dynamically change resource allocations without having to restart, reboot, or stop the VMs provides tremendous flexibility in how resources are allocated and used by the VMs, even in dense VM environments.

Certain embodiments can thus provide multi-tiered SLA management across VMs across one or more systems or devices. Complete dynamic manageability is provided for resources in a multi-tiered application. The applications can be of various types including but not limited to networking applications and services, virtualization applications and services, cloud-based computing applications and services, and the like. A complete end-to-end solution is provided with respect to allocation of resources, which in turn leads to higher availability of the services provided.

### (6) Dynamic resource allocation between VMs

Section (5) above describes how resource allocations for one or more VMs can be dynamically changed in the context of SLAs. This is however not intended to be limiting. Dynamic changes to resources allocated to VMs may also be performed in other contexts. For example, in certain embodiments, dynamic resource allocation changes may be performed based upon characteristics of the VMs being executed. An example of such a characteristic is the priority level associated with a VM.

As described above, a priority level may be assigned to a VM. In one embodiment, the priority assigned to a VM at the time of launch may be specified in an RCF. For example, the RCF depicted in Table A indicates the priorities ("High", "Medium", "Low") for the various VMs. The priority for a VM may also change over time while the VM is executing after the launch.

Certain embodiments enable dynamic resource allocations to be performed between VMs based upon priorities associated with the VMs. Rules for controlling resource allocations between VMs based upon their priority levels may be specified in policy information 132 or in the RCF. For VMs executing locally on a system or device, resource manager 122 executing locally on the system or device may, based upon policy information 132 on information in the RCF, determine when resource allocations between the VMs are to be changed. Resource manager 122 may send signals to the local hypervisor when changes are to be performed. The hypervisor may then perform the changes. At a distributed level, policy manager 136 may, based upon policy information 136, monitor and manage the dynamic resource allocations on various systems.

### Network Device embodiment

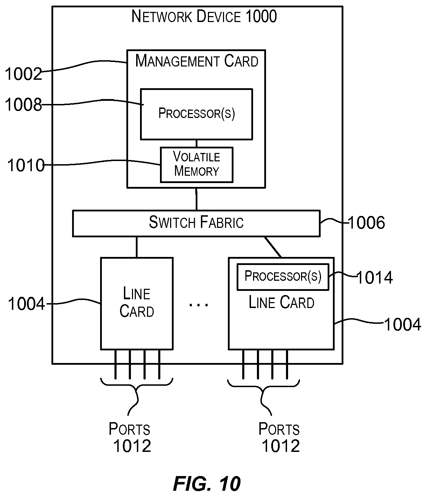

Various different systems and devices may incorporate an embodiment of the present invention. Fig. 10 provides an example of a network device that may incorporate an embodiment of the present invention. Fig. 10 depicts a simplified block diagram of a network device 1000 that may incorporate an embodiment of the present invention (e.g., network device 1000 may correspond to device 100 depicted in Fig. 1). In the embodiment depicted in Fig. 10, network device 1000 comprises a plurality of ports 1012 for receiving and forwarding data packets and multiple cards that are configured to perform processing to facilitate forwarding of the data packets to their intended destinations. The multiple cards may include one or more line cards 1004 and a management card 1002. In one embodiment, a card, sometimes also referred to as a blade or module, can be inserted into one of a plurality of slots on the chassis of network device 1000. This modular design allows for flexible configurations with different combinations of cards in the various slots of the device according to differing network topologies and switching requirements. The components of network device 1000 depicted in Fig. 10 are meant for illustrative purposes only and are not intended to limit the scope of the invention in any manner. Alternative embodiments may have more or less components than those shown in Fig. 10.

Ports 1012 represent the I/O plane for network device 1000. Network device 1000 is configured to receive and forward packets using ports 1012. A port within ports 1012 may be classified as an input port or an output port depending upon whether network device 1000 receives or transmits a data packet using the port. A port over which a packet is received by network device 1000 is referred to as an input port. A port used for communicating or forwarding a packet from network device 1000 is referred to as an output port. A particular port may function both as an input port and an output port. A port may be connected by a link or interface to a neighboring network device or network. Ports 1012 may be capable of receiving and/or transmitting different types of traffic at different speeds including 1 Gigabit/sec, 10 Gigabits/sec, 100 Gigabits/sec, or even more. In some embodiments, multiple ports of network device 1000 may be logically grouped into one or more trunks.

Upon receiving a data packet via an input port, network device 1000 is configured to determine an output port of device 1000 to be used for transmitting the data packet from network device 1000 to facilitate communication of the packet to its intended destination. Within network device 1000, the packet is forwarded from the input port to the determined output port and then transmitted from network device 1000 using the output port. In one embodiment, forwarding of packets from an input port to an output port is performed by one or more line cards 1004. Line cards 1004 represent the data forwarding plane of network device 1000. Each line card may comprise one or more packet processors that are programmed to perform forwarding of data packets from an input port to an output port. In one embodiment, processing performed by a line card may comprise extracting information from a received packet, performing lookups using the extracted information to determine an output port for the packet such that the packet can be forwarded to its intended destination, and to forward the packet to the output port. The extracted information may include, for example, the header of the received packet.

Management card 1002 is configured to perform management and control functions for network device 1000 and represents the management plane for network device 1000. In one embodiment, management card 1002 is communicatively coupled to line cards 1004 via switch fabric 1006. Management card 1002 may comprise one or more physical processors 1008, one or more of which may be multicore processors. These management card processors may be general purpose multicore microprocessors such as ones provided by Intel, AMD, ARM, Freescale Semiconductor, Inc., and the like, that operate under the control of software stored in associated memory 1010. The processors may run one or more VMs. Resources allocated to these VMs may be dynamically changed as described above. In some embodiments, multiple management cards may be provided for redundancy and to increase availability.

In some embodiments, one or more line cards 1004 may each comprise one or more physical processors 1014, some of which may be multicore. These processors may run one or more VMs. Resources allocated to these VMs may be dynamically changed as described above.

The embodiment depicted in Fig. 10 depicts a chassis-based system. This however is not intended to be limiting. Certain embodiments of the present invention may also be embodied in non-chassis based network devices, which are sometimes referred to as "pizza boxes." Such a network device may comprise a single physical multicore CPU or multiple physical multicore CPUs.

The ability to make dynamic changes to resources allocated to a VM significantly improves utilization of limited resources. The resources need not be statically bound to a VM anymore. Instead, resources may be efficiently allocated to a VM on a need-based basis. In this manner, the resources allocated to a VM may be changed over the lifetime of the VM without having to stop, restart, or reboot the VM.

Certain embodiments of the present invention facilitate improved sharing of limited resources between the various VMs and makes better use of available resources. For example, the ability to make dynamic changes to resources between VMs may be used by any system or device that can support multiple VMs.

The ability to make dynamic changes to resources allocated to VMs also expands the use of VMs in various applications. For example, as described above, with this ability, VMs may be used more efficiently as virtual routers, for providing high availability according to an active-passive model, for ensuring that SLA terms and conditions are met, for providing multi-tiered dynamic virtualization, and the like. In general, the above teachings can be applied to any application that uses VMs. There is no longer a need to statically assign resources to a VM.

Various embodiments described above can be realized using any combination of dedicated components and/or programmable processors and/or other programmable devices. The various embodiments may be implemented only in hardware, or only in software, or using combinations thereof. For example, the software may be in the form of instructions, programs, etc. stored in a computer-readable memory and may be executed by one or more processing units, where the processing unit is a processor, a core of a processor, or a percentage of a core. In certain embodiments, the various processing described above, including the processing depicted in the flowcharts in Figs. 2-7 can be performed in software without needing changes to existing device hardware (e.g., router hardware), thereby increasing the economic viability of the solution. Since certain inventive embodiments can be implemented entirely in software, it allows for quick rollouts or turnarounds along with lesser capital investment, which further increases the economic viability and attractiveness of the solution.

The various processes described herein can be implemented on the same processor or different processors in any combination, with each processor having one or more cores. Accordingly, where components or modules are described as being adapted to or configured to perform a certain operation, such configuration can be accomplished, e.g., by designing electronic circuits to perform the operation, by programming programmable electronic circuits (such as microprocessors) to perform the operation, by providing software or code instructions that are executable by the component or module (e.g., one or more processors) to perform the operation, or any combination thereof. Processes can communicate using a variety of techniques including but not limited to conventional techniques for interprocess communication, and different pairs of processes may use different techniques, or the same pair of processes may use different techniques at different times. Further, while the embodiments described above may make reference to specific hardware and software components, those skilled in the art will appreciate that different combinations of hardware and/or software components may also be used and that particular operations described as being implemented in hardware might also be implemented in software or vice versa.

The various embodiments are not restricted to operation within certain specific data processing environments, but are free to operate within a plurality of data processing environments. Additionally, although embodiments have been described using a particular series of transactions, this is not intended to be limiting.

Thus, although specific invention embodiments have been described, these are not intended to be limiting. Various modifications and equivalents are within the scope of the following claims.

## Claims

1. A device (100) comprising:
a plurality of processing units (102); and
a system memory (104);
wherein the device (100) is configured to execute a first virtual machine in a first portion of the system memory (104), the first virtual machine allocated a first amount of a resource and configured to execute a first program;
wherein the device (100) is configurable to execute a second virtual machine in a second portion of the system memory (104), the second virtual machine allocated a second amount of the resource, and configured to execute a second program the second amount being different from the first amount;
the device (100) is configured to execute a third virtual machine, the third virtual machine configurable to:
receive, from the first program, information indicative of a level of use of the resource by the first virtual machine;
access configuration information for the first resource for the first virtual machine, comprising a maximum amount threshold for the first resource for the first virtual machine that is less than a maximum amount of the first resource available on the device (100), an allocation threshold and a time threshold, indicative of a first level of use of the first resource beyond the allocation threshold for at least the time threshold resulting in a request for allocation of an additional amount of the first resource for the first virtual machine, and a priority associated with the first resource for the first virtual machine, wherein the priority is on a per virtual machine per resource basis and is specific to the first resource for the first virtual machine and is in relation to a priority of the first resource for the second virtual machine;
determine that the level of use of the first resource by the first virtual machine has exceeded by the allocation threshold for the time threshold;
determine to increase the first amount of the first resource allocated to the first virtual machine, based on determining that the level of use of the first resource by the first virtual machine has exceeded the allocation threshold for the time threshold;
determine that increasing the first amount of the first resource allocated to the first virtual machine does not violate the maximum amount threshold;
receive, from the second program, information indicative of a level of use of the resource by the second virtual machine; and
generate an event based on the information from the first program and the second program;
wherein, in response to the event, the device (100) is configured to change the amount of the resource allocated to the first virtual machine from the first amount to a different amount and to change the amount of the resource allocated to the second virtual machine from the second amount to a different amount, the change in amounts of the resource allocated to the first and second virtual machines being performed without stopping the first virtual machine or the second virtual machine.

2. The device (100) of claim 1 wherein:
the first amount of the resource is a first number of processing units (102) from the plurality of processing units (102); and
the second amount of the resource is a second number of processing units (102) from the plurality of processing units (102); wherein a processing unit in the plurality of processing units (102) is a processor, a processor core, or a percentage of a processor core.

3. The device (100) of claim 1 wherein:
the first amount of the resource is a first amount of the system memory (104); and
the second amount of the resource is a second amount of the system memory (104).

4. The device (100) of claim 1 wherein:
the first amount of the resource is a first amount of non-volatile memory; and
the second amount of the resource is a second amount of the non-volatile memory.

5. The device (100) of claim 1 further comprising a plurality of ports, wherein:
the first amount of the resource is a first number of ports from the plurality of ports; and
the second amount of the resource is a second number of ports from the plurality of ports.

6. The device (100) of claim 1 wherein:
the first amount of the resource is a first amount of bandwidth; and
the second amount of the resource is a second amount of bandwidth.

7. The device (100) of claim 1 wherein:
the first amount of the resource is a first amount of an input/output (I/O) resource; and
the second amount of the resource is a second amount of the I/O resource.

8. The device (100) of claim 1 wherein:
the third virtual machine is configured to cause the change in the amount of the resource allocated to the first virtual machine from the first amount to the second amount and to cause the change in the amount of the resource allocated to the second virtual machine from the second amount to the first amount.

9. A method comprising:
executing, by a device (100), a first program in a first virtual machine, the first virtual machine allocated a first amount of a resource;
executing, by the device (100), a second program in a second virtual machine, the second virtual machine allocated a second amount of the resource, the second amount being different from the first amount;
executing, by the device (100), a third virtual machine;
receiving, by the third virtual machine from the first program, information indicative of a level of use of the resource by the first virtual machine;
accessing configuration information for the first resource for the first virtual machine, comprising a maximum amount threshold for the first resource for the first virtual machine that is less than a maximum amount of the first resource available on the device (100), an allocation threshold and a time threshold, indicative of a first level of use of the first resource beyond the allocation threshold for at least the time threshold resulting in a request for allocation of an additional amount of the first resource for the first virtual machine, and a priority associated with the first resource for the first virtual machine, wherein the priority is on a per virtual machine per resource basis and is specific to the first resource for the first virtual machine and is in relation to a priority of the first resource for the second virtual machine;
determining that the level of use of the first resource by the first virtual machine has exceeded by the allocation threshold for the time threshold;
determining to increase the first amount of the first resource allocated to the first virtual machine, based on determining that the level of use of the first resource by the first virtual machine has exceeded the allocation threshold for the time threshold;
determining that increasing the first amount of the first resource allocated to the first virtual machine does not violate the maximum amount threshold;
receiving, by the third virtual machine from the second program, information indicative of a level of use of the resource by the second virtual machine;
generating by the third virtual machine an event based on the information from the first program and the second program;in response to the event, changing, by the device (100), the amount of the resource allocated to the first virtual machine from the first amount to a different amount and changing the amount of the resource allocated to the second virtual machine from the second amount to a different amount, the changing being performed without stopping the first virtual machine or the second virtual machine.

10. The method of claim 9 wherein:
the first amount of the resource is a first number of processing units (102) of the device (100); and
the second amount of the resource is a second number of processing units (102) of the device (100); wherein a processing unit of the device (100) is a processor, a processor core, or a percentage of a processor core.

11. The method of claim 10 wherein the resource is system memory (104) of the device (100), non-volatile memory, or an input/output (I/O) resource.

12. The method of claim 10 wherein:
the first amount of the resource is a first number of ports of the device (100); and
the second amount of the resource is a second number of ports of the device (100);
or wherein:
the first amount of the resource is a first amount of bandwidth; and
the second amount of the resource is a second amount of bandwidth.

13. The method of claim 10 further comprising:
executing a first program in the first virtual machine;
executing a second program in the second virtual machine;
executing, by the device (100), a third virtual machine;
receiving, by the third virtual machine from the first program, information indicative of a level of use of the resource by the first virtual machine; and
receiving, by the third virtual machine from the second program, information indicative of a level of use of the resource by the second virtual machine.

14. The method of claim 10 further comprising:
executing, by the device (100), a third virtual machine;
wherein the changing comprises causing, by one or more programs executed by the third virtual machine, the change in the amount of the resource allocated to the first virtual machine from the first amount to the second amount and the change in the amount of the resource allocated to the second virtual machine from the second amount to the first amount.

## Patentansprüche

1. Vorrichtung (100), die aufweist:
eine Vielzahl von Verarbeitungseinheiten (102), und
einen Systemspeicher (104);
wobei die Vorrichtung (100) dazu konfiguriert ist, eine erste virtuelle Maschine in einem ersten Abschnitt des Systemspeichers (104) auszuführen, wobei der ersten virtuellen Maschine ein erster Betrag einer Ressource zugewiesen ist und sie dazu konfiguriert ist, ein erstes Programm auszuführen;
wobei die Vorrichtung (100) dazu konfigurierbar ist, eine zweite virtuelle Maschine in einem zweiten Abschnitt des Systemspeichers (104) auszuführen, wobei der zweiten virtuellen Maschine ein zweiter Betrag der Ressource zugewiesen ist und sie dazu konfiguriert ist, ein zweites Programm auszuführen, wobei sich der zweite Betrag von dem ersten Betrag unterscheidet;
wobei die Vorrichtung (100) dazu konfiguriert ist, eine dritte virtuelle Maschine auszuführen, wobei die dritte virtuelle Maschine konfigurierbar ist zum:
Empfangen, von dem ersten Programm, von Informationen, die ein Maß der Benutzung der Ressource durch die erste virtuelle Maschine angeben;
Zugreifen auf Konfigurationsinformationen für die erste Ressource für die erste virtuelle Maschine, die einen Maximalbetrag-Schwellenwert für die erste Ressource für die erste virtuelle Maschine aufweisen, der kleiner ist als ein Maximalbetrag der ersten Ressource, der auf der Vorrichtung (100) verfügbar ist, einen Zuweisungsschwellenwert und einen Zeitschwellenwert, die ein erstes Maß der Benutzung der ersten Ressource angeben, das über den Zuweisungsschwellenwert für wenigstens den Zeitschwellenwert hinausgeht, was zu einer Anforderung der Zuweisung eines zusätzlichen Betrags der ersten Ressource für die erste virtuelle Maschine führt, und eine Priorität, die zu der ersten Ressource für die erste virtuelle Maschine gehört, wobei die Priorität auf einer virtuelle-Maschine-pro-Ressource-Basis ist und für die erste Ressource für die erste virtuelle Maschine spezifisch ist, und zu einer Priorität der ersten Ressource für die zweite virtuelle Maschine in Relation steht;
Bestimmen, dass das Maß der Benutzung der ersten Ressource durch die erste virtuelle Maschine den Zuweisungsschwellenwert für den Zeitschwellenwert überschritten hat;
Bestimmen, den ersten Betrag der ersten Ressource, der der ersten virtuellen Maschine zugewiesen wurde, zu erhöhen, basierend auf dem Bestimmen, dass das Maß der Benutzung der ersten Ressource durch die erste virtuelle Maschine den Zuweisungsschwellenwert für den Zeitschwellenwert überschritten hat;
Bestimmen, dass das Erhöhen des ersten Betrags der ersten Ressource, der der ersten virtuellen Maschine zugewiesen wurde, den Maximalbetrags-Schwellenwert nicht übersteigt;
Empfangen, von dem zweiten Programm, von Informationen, die ein Maß der Benutzung der Ressource durch die zweite virtuelle Maschine angeben; und
Erzeugen eines Ereignisses basierend auf den Informationen von dem ersten Programm und dem zweiten Programm;
wobei, im Ansprechen auf das Ereignis, die Vorrichtung (100) dazu konfiguriert ist, den Betrag der Ressource, der der ersten Maschine zugewiesen wurde, von dem ersten Betrag in einen anderen Betrag zu ändern und den Betrag der Ressource, der der zweiten virtuellen Maschine zugewiesen wurde, von dem zweiten Betrag in einen anderen Betrag zu ändern, wobei die Änderung der Beträge der Ressource, die den ersten und zweiten virtuellen Maschinen zugewiesen werden, durchgeführt wird, ohne die erste virtuelle Maschine oder die zweite virtuelle Maschine anzuhalten.

2. Vorrichtung (100) nach Anspruch 1, wobei:
der erste Betrag der Ressource eine erste Anzahl von Verarbeitungseinheiten (102) der Vielzahl von Verarbeitungseinheiten (102) ist; und
der zweite Betrag der Ressource eine zweite Anzahl von Verarbeitungseinheiten (102) der Vielzahl von Verarbeitungseinheiten (102) ist; wobei eine Verarbeitungseinheit der Vielzahl von Verarbeitungseinheiten (102) ein Prozessor, ein Prozessorkern oder ein Anteil eines Prozessorkerns ist.

3. Vorrichtung (100) nach Anspruch 1, wobei:
der erste Betrag der Ressource ein erster Betrag des Systemspeichers (104) ist; und
der zweite Betrag der Ressource ein zweiter Betrag des Systemspeichers (104) ist.

4. Vorrichtung (100) nach Anspruch 1, wobei:
der erste Betrag der Ressource ein erster Betrag eines nicht flüchtigen Speichers ist; und
der zweite Betrag der Ressource ein zweiter Betrag des nicht flüchtigen Speichers ist.

5. Vorrichtung (100) nach Anspruch 1, die des Weiteren eine Vielzahl von Ports aufweist, wobei:
der erste Betrag der Ressource eine erste Anzahl von Ports der Vielzahl von Ports ist; und
der zweite Betrag der Ressource eine zweite Anzahl von Ports der Vielzahl von Ports ist.

6. Vorrichtung nach Anspruch 1, wobei:
der erste Betrag der Ressource ein erster Betrag von Bandbreite ist; und
der zweite Betrag der Ressource ein zweiter Betrag von Bandbreite ist.

7. Vorrichtung nach Anspruch 1, wobei:
der erste Betrag der Ressource ein erster Betrag einer Eingabe-/Ausgabe- bzw. Input/Output (I/O) -Ressource ist; und
der zweite Betrag der Ressource ein zweiter Betrag der I/O-Ressource ist.

8. Vorrichtung (100) nach Anspruch 1, wobei:
die dritte virtuelle Maschine dazu konfiguriert ist, die Änderung des Betrags der Ressource, der der ersten virtuellen Maschine zugewiesen ist, von dem ersten Betrag in den zweiten Betrag zu veranlassen und die Änderung des Betrags der Ressource, der der zweiten virtuellen Maschine zugewiesen ist, von dem zweiten Betrag in den ersten Betrag zu veranlassen.

9. Verfahren, das umfasst:
Ausführen, durch eine Vorrichtung (100), eines ersten Programms in einer ersten virtuellen Maschine, wobei der ersten virtuellen Maschine ein erster Betrag einer Ressource zugewiesen ist;
Ausführen, durch die Vorrichtung (100), eines zweiten Programms in einer zweiten virtuellen Maschine, wobei der zweiten virtuellen Maschine ein zweiter Betrag der Ressource zugewiesen ist, wobei sich der zweite Betrag von dem ersten Betrag unterscheidet;
Ausführen, durch die Vorrichtung (100), einer dritten virtuellen Maschine;
Empfangen, durch die dritte virtuelle Maschine von dem ersten Programm, von Informationen, die ein Maß der Benutzung der Ressource durch die erste virtuelle Maschine angeben;
Zugreifen auf Konfigurationsinformationen für die erste Ressource für die erste virtuelle Maschine, die einen Maximalbetrag-Schwellenwert für die erste Ressource für die erste virtuelle Maschine aufweisen, der kleiner ist als ein Maximalbetrag der ersten Ressource, der auf der Vorrichtung (100) verfügbar ist, einen Zuweisungsschwellenwert und einen Zeitschwellenwert, die ein erstes Maß der Benutzung der ersten Ressource angeben, das über den Zuweisungsschwellenwert für wenigstens den Zeitschwellenwert hinausgeht, was zu einer Anforderung der Zuweisung eines zusätzlichen Betrags der ersten Ressource für die erste virtuelle Maschine führt, und eine Priorität, die zu der ersten Ressource für die erste virtuelle Maschine gehört, wobei die Priorität auf einer virtuelle-Maschine-pro-Ressource-Basis ist und für die erste Ressource für die erste virtuelle Maschine spezifisch ist, und zu einer Priorität der ersten Ressource für die zweite virtuelle Maschine in Relation steht;
Bestimmen, dass das Maß der Benutzung der ersten Ressource durch die erste virtuelle Maschine den Zuweisungsschwellenwert für den Zeitschwellenwert überschritten hat;
Bestimmen, den ersten Betrag der ersten Ressource, der der ersten virtuellen Maschine zugewiesen wurde, zu erhöhen, basierend auf dem Bestimmen, dass das Maß der Benutzung der ersten Ressource durch die erste virtuelle Maschine den Zuweisungsschwellenwert für den Zeitschwellenwert überschritten hat;
Bestimmen, dass das Erhöhen des ersten Betrags der ersten Ressource, der der ersten virtuellen Maschine zugewiesen wurde, den Maximalbetrags-Schwellenwert nicht übersteigt;
Empfangen, durch die dritte virtuelle Maschine von dem zweiten Programm, von Informationen, die ein Maß der Benutzung der Ressource durch die zweite virtuelle Maschine angeben;
Erzeugen, durch die dritte virtuelle Maschine, eines Ereignisses basierend auf den Informationen von dem ersten Programm und dem zweiten Programm;
im Ansprechen auf das Ereignis, Ändern, durch die Vorrichtung (100), des Betrags Ressource, der der ersten Maschine zugewiesen wurde, von dem ersten Betrag in einen anderen Betrag, und Ändern des Betrags der Ressource, der der zweiten virtuellen Maschine zugewiesen wurde, von dem zweiten Betrag in einen anderen Betrag, wobei die Änderung durchgeführt wird, ohne die erste virtuelle Maschine oder die zweite virtuelle Maschine anzuhalten.

10. Verfahren nach Anspruch 9, wobei:
der erste Betrag der Ressource eine erste Anzahl von Verarbeitungseinheiten (102) der Vorrichtung (100) ist; und
der zweite Betrag der Ressource eine zweite Anzahl von Verarbeitungseinheiten (102) der Vorrichtung (100) ist; wobei eine Verarbeitungseinheit der Vorrichtung (100) ein Prozessor, ein Prozessorkern oder ein Anteil eines Prozessorkerns ist.

11. Verfahren nach Anspruch 10, wobei die Ressource ein Systemspeicher (104) der Vorrichtung (100), ein nicht flüchtiger Speicher oder eine Eingabe-/Ausgabe- bzw. Input/Output (I/O) -Ressource ist.

12. Verfahren nach Anspruch 10, wobei:
der erste Betrag der Ressource eine erste Anzahl von Ports der Vorrichtung (100) ist; und
der zweite Betrag der Ressource eine zweite Anzahl von Ports der Vorrichtung (100) ist;
oder wobei:
der erste Betrag der Ressource ein erster Betrag von Bandbreite ist; und
der zweite Betrag der Ressource ein zweiter Betrag von Bandbreite ist.

13. Verfahren nach Anspruch 10, das des Weiteren umfasst:
Ausführen eines ersten Programms in der ersten virtuellen Maschine;
Ausführen eines zweiten Programms in der zweiten virtuellen Maschine;
Ausführen, durch die Vorrichtung (100), einer dritten virtuellen Maschine;
Empfangen, durch die dritte virtuelle Maschine von dem ersten Programm, von Informationen, die das Maß der Benutzung der Ressource durch die erste virtuelle Maschine angeben; und
Empfangen, durch die dritte virtuelle Maschine von dem zweiten Programm, von Informationen, die das Maß der Benutzung der Ressource durch die zweite virtuelle Maschine angeben.

14. Verfahren nach Anspruch 10, das des Weiteren umfasst:
Ausführen, durch die Vorrichtung (100), einer dritten virtuellen Maschine;
wobei das Ändern das Veranlassen, durch ein oder mehrere Programmen, die von der dritten virtuellen Maschine ausgeführt werden, der Änderung des Betrags der Ressource umfasst, der der ersten virtuellen Maschine zugewiesen ist, von dem ersten Betrag in den zweiten Betrag, und der Änderung des Betrags der Ressource, der der zweiten virtuellen Maschine zugewiesen ist, von dem zweiten Betrag in den ersten Betrag.

## Revendications

1. Dispositif (100) comprenant :
une pluralité d'unités de traitement (102) ; et
une mémoire de système (104) ;
dans lequel le dispositif (100) est conçu pour exécuter une première machine virtuelle dans une première partie de la mémoire de système (104), la première machine virtuelle a alloué une première quantité d'une ressource et est conçue pour exécuter un premier programme ;
dans lequel le dispositif (100) peut être conçu pour exécuter une deuxième machine virtuelle dans une seconde partie de la mémoire de système (104), la deuxième machine virtuelle a alloué une seconde quantité de la ressource et est conçue pour exécuter un second programme, la seconde quantité étant différente de la première quantité ;
le dispositif (100) est conçu pour exécuter une troisième machine virtuelle, la troisième machine virtuelle peut être conçue pour :
recevoir, à partir du premier programme, des informations indiquant un niveau d'utilisation de la ressource par la première machine virtuelle ;
accéder à des informations de configuration pour la première ressource concernant la première machine virtuelle, comprenant un seuil de quantité maximum pour la première ressource concernant la première machine virtuelle qui est inférieur à une quantité maximum de la première ressource disponible sur le dispositif (100), un seuil d'allocation et un seuil temporel, indiquant un premier niveau d'utilisation de la première ressource au-delà du seuil d'allocation pour au moins le seuil temporel entraînant une demande d'allocation d'une quantité supplémentaire de la première ressource pour la première machine virtuelle, et une priorité associée à la première ressource concernant la première machine virtuelle, dans lequel la priorité est sur la base par ressource et par machine virtuelle et est spécifique à la première ressource concernant la première machine virtuelle, et concerne une priorité de la première ressource pour la deuxième machine virtuelle ;
déterminer que le niveau d'utilisation de la première ressource par la première machine virtuelle a dépassé le seuil d'allocation pour le seuil temporel ;
déterminer d'augmenter la première quantité de la première ressource allouée à la première machine virtuelle, sur la base de la détermination que le niveau d'utilisation de la première ressource par la première machine virtuelle a dépassé le seuil d'allocation pour le seuil temporel ;
déterminer qu'une augmentation de la première quantité de la première ressource allouée à la première machine virtuelle ne viole pas le seuil de quantité maximum ;
recevoir, à partir du second programme, des informations indiquant un niveau d'utilisation de la ressource par la deuxième machine virtuelle ; et
générer un événement sur la base des informations provenant du premier programme et du second programme ;
dans lequel, en réponse à l'événement, le dispositif (100) est conçu pour changer la quantité de la ressource allouée à la première machine virtuelle de la première quantité à une quantité différente, et pour changer la quantité de la ressource allouée à la deuxième machine virtuelle de la seconde quantité à une quantité différente, le changement de quantités de la ressource allouée aux première et deuxième machines virtuelles étant mis en oeuvre sans arrêter la première machine virtuelle ou la deuxième machine virtuelle.

2. Dispositif (100) selon la revendication 1, dans lequel :
la première quantité de la ressource est un premier nombre d'unités de traitement (102) à partir de la pluralité d'unités de traitement (102) ; et
la seconde quantité de la ressource est un second nombre d'unités de traitement (102) à partir de la pluralité d'unités de traitement (102) ; dans lequel une unité de traitement dans la pluralité d'unités de traitement (102) est un processeur, un coeur de processeur ou un pourcentage d'un coeur de processeur.

3. Dispositif (100) selon la revendication 1, dans lequel :
la première quantité de la ressource est une première quantité de la mémoire de système (104) ; et
la seconde quantité de la ressource est une seconde quantité de la mémoire de système (104).

4. Dispositif (100) selon la revendication 1, dans lequel :
la première quantité de la ressource est une première quantité d'une mémoire non volatile ; et
la seconde quantité de la ressource est une seconde quantité de la mémoire non volatile.

5. Dispositif (100) selon la revendication 1, comprenant en outre une pluralité de ports, dans lequel :
la première quantité de la ressource est un premier nombre de ports parmi la pluralité de ports ; et
la seconde quantité de la ressource est un second nombre de ports parmi la pluralité de ports.

6. Dispositif (100) selon la revendication 1, dans lequel :
la première quantité de la ressource est une première quantité de bande passante ; et
la seconde quantité de la ressource est une seconde quantité de bande passante.

7. Dispositif (100) selon la revendication 1, dans lequel :
la première quantité de la ressource est une première quantité d'une ressource d'entrée/sortie (E/S) ; et
la seconde quantité de la ressource est une seconde quantité de la ressource E/S.

8. Dispositif (100) selon la revendication 1, dans lequel :
la troisième machine virtuelle est conçue pour amener le changement dans la quantité de la ressource allouée à la première machine virtuelle de la première quantité à la seconde quantité, et pour amener le changement dans la quantité de la ressource allouée à la deuxième machine virtuelle de la seconde quantité à la première quantité.

9. Procédé comprenant les étapes consistant à :
exécuter par un dispositif (100) un premier programme dans une première machine virtuelle, la première machine virtuelle a alloué une première quantité d'une ressource ;
exécuter par le dispositif (100) un second programme dans une deuxième machine virtuelle, la deuxième machine virtuelle a alloué une seconde quantité de la ressource, la seconde quantité étant différente de la première quantité ;
exécuter par le dispositif (100) une troisième machine virtuelle ;
recevoir, par la troisième machine virtuelle à partir du premier programme, des informations indiquant un niveau d'utilisation de la ressource par la première machine virtuelle ;
accéder à des informations de configuration pour la première ressource concernant la première machine virtuelle, comprenant un seuil de quantité maximum pour la première ressource concernant la première machine virtuelle qui est inférieur à une quantité maximum de la première ressource disponible sur le dispositif (100), un seuil d'allocation et un seuil temporel, indiquant un premier niveau d'utilisation de la première ressource au-delà du seuil d'allocation pendant au moins le seuil temporel entraînant une demande d'allocation d'une quantité supplémentaire de la première ressource pour la première machine virtuelle, et une priorité associée à la première ressource pour la première machine virtuelle, dans lequel la priorité est sur la base par ressource et par machine virtuelle et est spécifique à la première ressource pour la première machine virtuelle, et concerne une priorité de la première ressource pour la deuxième machine virtuelle ;
déterminer que le niveau d'utilisation de la première ressource par la première machine virtuelle a dépassé le seuil d'allocation pour le seuil temporel ;
déterminer d'augmenter la première quantité de la première ressource allouée à la première machine virtuelle, sur la base de la détermination que le niveau d'utilisation de la première ressource par la première machine virtuelle a dépassé le seuil d'allocation pour le seuil temporel ;
déterminer qu'une augmentation de la première quantité de la première ressource allouée à la première machine virtuelle ne viole pas le seuil de quantité maximum ;
recevoir, par la troisième machine virtuelle à partir du second programme, des informations indiquant un niveau d'utilisation de la ressource par la deuxième machine virtuelle ; et
générer par la troisième machine virtuelle un événement sur la base des informations provenant du premier programme et du second programme ; en réponse à l'événement, changer, par le dispositif (100), la quantité de la ressource allouée à la première machine virtuelle de la première quantité à une quantité différente, et changer la quantité de la ressource allouée à la deuxième machine virtuelle de la seconde quantité à une quantité différente, le changement étant mis en oeuvre sans arrêter la première machine virtuelle ou la deuxième machine virtuelle.

10. Procédé selon la revendication 9, dans lequel :
la première quantité de la ressource est un premier nombre d'unités de traitement (102) du dispositif (100) ; et
la seconde quantité de la ressource est un second nombre d'unités de traitement (102) du dispositif; dans lequel une unité de traitement du dispositif (100) est un processeur, un coeur de processeur ou un pourcentage d'un coeur de processeur.

11. Procédé selon la revendication 10, dans lequel la ressource est une mémoire de système (104) du dispositif (100), une mémoire non volatile ou une ressource d'entrée/sortie (E/S).

12. Procédé selon la revendication 10, dans lequel :
la première quantité de la ressource est un premier nombre de ports du dispositif (100) ; et
la seconde quantité de la ressource est un second nombre de ports du dispositif (100) ;
ou dans lequel :
la première quantité de la ressource est une première quantité de bande passante ; et
la seconde quantité de la ressource est une seconde quantité de bande passante.

13. Procédé selon la revendication 10, comprenant en outre :
l'exécution d'un premier programme dans la première machine virtuelle ;
l'exécution d'un second programme dans la deuxième machine virtuelle ;
l'exécution, grâce au dispositif (100), d'une troisième machine virtuelle ;
la réception, par la troisième machine virtuelle à partir du premier programme, d'informations indiquant un niveau d'utilisation de la ressource par la première machine virtuelle ; et
la réception, par la troisième machine virtuelle à partir du second programme, d'informations indiquant un niveau d'utilisation de la ressource par la deuxième machine virtuelle.

14. Procédé selon la revendication 10, comprenant en outre :
l'exécution, grâce au dispositif (100), d'une troisième machine virtuelle ;
dans lequel le changement consiste à amener, par un ou plusieurs programmes exécutés par la troisième machine virtuelle, le changement de la quantité de la ressource allouée à la première machine virtuelle de la première quantité à la seconde quantité, et le changement de la quantité de la ressource allouée à la deuxième machine virtuelle de la seconde quantité à la première quantité.
